# EUROPEAN PATENT APPLICATION

(11) **EP 4 394 938 A1**
(43) Date of publication of application: **03.07.2024**
(21) Application number: 22943008.7
(22) Date of filing: 23.05.2022
(51) Int. Cl.: H01M 4/48, H01M 4/58

(54) **POSITIVE ELECTRODE ACTIVE MATERIAL, PREPARATION METHOD THEREFOR, POSITIVE ELECTRODE SHEET, SECONDARY BATTERY, BATTERY MODULE, BATTERY PACK AND ELECTRIC APPARATUS**

(71) Applicant: Contemporary Amperex Technology Co., Limited, Ningde, Fujian 352100 (CN)
(72) Inventor: YUAN, Tianci, Ningde, Fujian 352100 (CN); JIANG, Yao, Ningde, Fujian 352100 (CN); ZHANG, Xinxin, Ningde, Fujian 352100 (CN); OUYANG, Chuying, Ningde, Fujian 352100 (CN); CHEN, Shangdong, Ningde, Fujian 352100 (CN); WU, Lingjing, Ningde, Fujian 352100 (CN); KANG, Weibin, Ningde, Fujian 352100 (CN)
(74) Representative: Gong, Jinping
(86) International application number: PCT/CN2022/094485
(87) International publication number: WO 2023/225796

(57) **Abstract**

Embodiments of this application provide a positive electrode active material and a preparation method thereof, a positive electrode plate, a secondary battery, a battery module, a battery pack, and an electric apparatus. The positive electrode active material includes a core and a shell layer enveloping the core, the core having a chemical formula LiₐAₓMn₁₋yB_{y}P1_{-z}C_{z}O₄₋ₙDₙ, where A includes one or more elements selected from Zn, Al, Na, K, Mg, Nb, Mo, and W, B includes one or more elements selected from Ti, V, Zr, Fe, Ni, Mg, Co, Ga, Sn, Sb, Nb, and Ge, C includes one or more elements selected from B, S, Si, and N, and D includes one or more elements selected from S, F, Cl, and Br; and the shell layer is a doped carbon layer, a doping element in the doped carbon layer including any one or more selected from nitrogen, phosphorus, sulfur, boron, and fluorine. The rate performance and cycling performance of a lithium manganese phosphate positive electrode active material are improved.

## Description

### TECHNICAL FIELD

This application relates to the field of battery technologies, and in particular, to a positive electrode active material and a preparation method thereof, a positive electrode plate, a secondary battery, a battery module, a battery pack, and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Along with the great development of lithium-ion secondary batteries, higher requirements are imposed on their energy density, cycling performance, safety performance, and the like.

Lithium manganese phosphate, as a positive electrode active material for lithium-ion secondary batteries, has the advantages of high capacity, good safety, and low cost. However, lithium manganese phosphate has poor rate performance, which restricts its commercial application.

### SUMMARY

This application provides a positive electrode active material and a preparation method thereof, a positive electrode plate, a secondary battery, a battery module, a battery pack, and an electric apparatus, so as to resolve the problem of poor rate performance of a lithium manganese phosphate positive electrode active material.

A first aspect of this application provides a positive electrode active material including a core and a shell layer enveloping the core, the core having a chemical formula LiₐAₓMn_{1-y}B_{y}P_{1-z}C_{z}O₄₋ₙDₙ, where A includes one or more elements selected from a group consisting of Zn, Al, Na, K, Mg, Nb, Mo, and W, B includes one or more elements selected from a group consisting of Ti, V, Zr, Fe, Ni, Mg, Co, Ga, Sn, Sb, Nb, and Ge, C includes one or more elements selected from a group consisting of B (boron), S, Si, and N, D includes one or more elements selected from a group consisting of S, F, Cl, and Br, a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral; and the shell layer is a doped carbon layer, a doping element in the doped carbon layer including any one or more selected from a group consisting of nitrogen, phosphorus, sulfur, boron, and fluorine.

In this application, with simultaneous doping of a specific amount of a specific element at Li, Mn, P and O sites of the compound LiMnPO₄, significantly improved rate performance can be obtained, while the dissolution of Mn and the element doping at the Mn site is significantly reduced, significantly improved cycling performance and/or high-temperature stability is obtained, and the gram capacity and compacted density of the material can also be improved. In addition, introducing doping element atoms into the shell layer alters the charge distribution around carbon atoms, improving the electrical conductivity of the shell layer. Additionally, the doping element atoms create a defect structure within the carbon material, facilitating the rapid migration of lithium ions. Further, the doping element atoms generate a new functional group containing the doping element on the carbon surface, thereby forming new active sites, increasing the solvation and desolvation speed of lithium ions, and thus improving the capacity and rate performance.

In any embodiment of the first aspect, based on a weight of the core, an application amount of the doped carbon layer is greater than 0wt% and less than or equal to 6wt%, optionally from 3wt% to 5wt%. The conductivity of the doped carbon layer is fully utilized, and the defect of excessively long lithium ion transport path caused by an excessive application amount is avoided.

In any embodiment of the first aspect, a mass percentage of the doping element in the doped carbon layer is below 30%, and optionally, the mass percentage of the doping element in the doped carbon layer is below 20%. The doping element within the foregoing percentage range can effectively improve the electrical conductivity of a pure carbon layer and effectively avoid excessive surface activity caused by adding an excessive amount of the doping element, thereby effectively controlling interfacial side reactions caused by excessive doping of the coating layer.

In any embodiment of the first aspect, optionally, the doping element is nitrogen, phosphorus, sulfur, boron, or fluorine. Selecting a single type of element as the doping element helps to control the performance of the doped carbon layer.

In any embodiment of the first aspect, optionally, the doping element is element nitrogen or element sulfur, and a mass percentage of the doping element in the doped carbon layer is 1% to 15%. Nitrogen atoms and sulfur atoms have an atomic radius closer to that of carbon atoms and are unlikely to destroy the carbon skeleton. Therefore, with the doping amount of nitrogen or sulfur atoms falling within the foregoing relatively wide range, the electrical conductivity of the doped carbon layer can be fully utilized, and the lithium ion transport and lithium ion desolvation capacity can be increased.

In any embodiment of the first aspect, optionally, the doping element is element phosphorus, element boron, or element fluorine, and a mass percentage of the doping element in the doped carbon layer is 0.5% to 5%. Phosphorus atoms, boron atoms, and fluorine atoms have an atomic radius different from carbon atoms and are likely to destroy the carbon skeleton in a case of excessive doping. Therefore, with the doping amount of phosphorus, boron, and fluorine atoms falling within the foregoing relatively narrow range, the electrical conductivity of the doped carbon layer can be fully utilized, and the lithium ion transport and lithium ion desolvation capacity can be increased.

In any embodiment of the first aspect, A, C, and D are each independently any one of the elements within their respective ranges, and B is at least two elements within its range; and optionally, A is any one element selected from Mg and Nb, and/or B is at least two elements selected from a group consisting of Fe, Ti, V, Co, and Mg, optionally Fe and more than one element selected from a group consisting of Ti, V, Co, and Mg, and/or C is S, and/or D is F. In this way, the rate performance, gram capacity and/or high-temperature performance of a secondary battery can be further improved.

In any embodiment of this aspect, x is selected from a range of 0.001 to 0.005; and/or y is selected from a range of 0.01 to 0.5, optionally from a range of 0.25 to 0.5; and/or z is selected from a range of 0.001 to 0.005; and/or n is selected from a range of 0.001 to 0.005. In this way, the gram capacity and rate performance and/or kinetic performance of the material can be further improved; and/or the rate performance and/or high-temperature performance of the battery can be further improved.

In any embodiment of the first aspect, (1-y):y is within a range of 1 to 4, optionally within a range of 1.5 to 3, and a:x is within a range of 9 to 1100, optionally within a range of 190 to 998. In this way, the energy density and cycling performance of the positive electrode active material can be further improved.

In any embodiment of the first aspect, a lattice change rate of the core is below 8%, optionally below 4%. In this way, the rate performance of the cell can be improved.

In any embodiment of the first aspect, a Li/Mn antisite defect concentration of the positive electrode active material is below 2%, optionally below 0.5%. In this way, the gram capacity and rate performance of the positive electrode active material can be improved.

In any embodiment of the first aspect, a surface oxygen valence of the positive electrode active material is below -1.82, optionally from -1.89 to -1.98. In this way, the cycling performance and high-temperature stability of the cell can be improved.

In any embodiment of the first aspect, a compacted density under 3T of the positive electrode active material is above 2.0 g/cm³, optionally above 2.2 g/cm³. In this way, the volumetric energy density of the cell can be increased.

A second aspect of this application provides a preparation method of any one positive electrode active material according to the first aspect. The preparation method includes the following steps:
(1) dissolving a manganese source, a source of element B, and an acid in a solvent and stirring to generate a suspension of a manganese salt doped with element B, and filtering the suspension and drying a filter cake to obtain the manganese salt doped with element B; (2) adding a lithium source, a phosphorus source, a source of element A, a source of element C, a source of element D, a carbon source, a source of a doping element in a carbon layer, a solvent, and the manganese salt doped with element B obtained in step (1) into a reaction vessel for grinding and mixing to obtain a slurry; (3) transferring the slurry obtained in step (2) to a spray drying device for spray drying and granulation to obtain particles; and (4) sintering the particles obtained in step (3) to obtain the positive electrode active material.

In any embodiment of the second aspect, the source of element A is selected from at least one of a group consisting of elementary substance, oxide, phosphate, oxalate, carbonate, and sulfate of element A; the source of element B is selected from at least one of a group consisting of elementary substance, oxide, phosphate, oxalate, carbonate, and sulfate of element B; the source of element C is selected from at least one of a group consisting of sulfate, borate, nitrate, and silicate of element C; the source of element D is selected from at least one of a group consisting of elementary substance and ammonium salt of element D; the carbon source is selected from one or more from a group consisting of starch, sucrose, glucose, cellulose, polyvinyl alcohol, polyethylene glycol, sodium carboxymethyl cellulose, citric acid, lactic acid, and succinic acid; the source of the doping element in the carbon layer is selected from one or more from a group consisting of a source of element nitrogen, a source of element phosphorus, a source of element sulfur, a source of element boron, and a source of element fluorine; the source of element nitrogen is selected from any one or more from a group consisting of ethylenediamine, melamine, benzylamine, acetonitrile, aminated sucrose, pyrrole, aniline, acrylonitrile, polyimide acid, and a nitrogen-containing aliphatic heterocyclic compound; the source of element phosphorus is selected from any one or more from a group consisting of elemental phosphorus, phosphorus pentoxide, ammonium dihydrogen phosphate, ammonium phosphate, phosphoric acid, hypophosphorous acid, phosphorous acid, metaphosphoric acid, pyrophosphoric acid, polyphosphoric acid, phytic acid, phosphorus trichloride, phosphorus pentachloride, phosphorus tribromide, triphenoxyphos, triphenylphosphine, and tributylphosphine; the source of element sulfur is selected from any one or more from a group consisting of sulfur powder, sulfuric acid, sulfurous acid, ammonium sulfate, thiophene, thiazole, thiourea, dimethyl sulfoxide, thioacetamide, and mercaptan; the source of element boron is selected from any one or more from a group consisting of elemental boron, boric acid, diboron trioxide, boron nitride, trimethyl borate, sodium tetraphenylborate, and boron trichloride; and the source of element fluorine is selected from any one of a group consisting of hydrofluoric acid, ammonium fluoride, and a fluorine-containing organic substance, the fluorine-containing organic substance being selected from any one of fluorine-containing alkane, fluorine-containing olefin, fluorine-containing aromatic hydrocarbon, and fluorine-containing carboxylic acid. The sources of the doping elements being selected within the foregoing ranges can improve the performance of the material.

The foregoing fluorine-containing organic substance may be further selected from any one or more from a group consisting of difluoromethane, difluoroethane, polytrifluoroethylene, polytetrafluoroethylene, polyvinylidene fluoride, polyvinyl fluoride, and the like.

In any embodiment of the second aspect, the stirring in step (1) is performed at a temperature within a range of 60°C to 120°C.

In any embodiment of the second aspect, the stirring in step (1) is performed at a stirring speed of 200 rpm to 800 rpm.

In any embodiment of the second aspect, the grinding and mixing in step (2) are performed for 8 hours to 15 hours.

In this way, controlling the reaction temperature, stirring speed, and mixing time during doping allows for uniform distribution of the doping element and higher crystallinity of the material after sintering, thereby improving the gram capacity and rate performance of the material.

In any embodiment of the second aspect, the sintering in step (4) is performed for 6 hours to 14 hours at a temperature within a range of 600°C to 900°C. In this way, the high-temperature stability and cycling performance of the secondary battery can be improved.

A third aspect of this application provides a positive electrode plate including a positive electrode current collector and a positive electrode film layer disposed on at least one surface of the positive electrode current collector, where the positive electrode film layer includes any one positive electrode active material according to the first aspect or a positive electrode active material prepared using any one preparation method according to the second aspect; and based on a total weight of the positive electrode film layer, a percentage of the positive electrode active material in the positive electrode film layer is above 10wt%, optionally from 95wt% to 99.5wt%.

A fourth aspect of this application provides a secondary battery including any one positive electrode active material according to the first aspect or a positive electrode active material prepared using any one preparation method according to the second aspect or the positive electrode plate according to the third aspect.

A fifth aspect of this application provides a battery module including a secondary battery, where the secondary battery is the secondary battery according to the fourth aspect.

A sixth aspect of this application provides a battery pack including a battery module, where the battery module is the battery module according to the fifth aspect.

A seventh aspect of this application provides an electric apparatus including a secondary battery, a battery module, or a battery pack, where the secondary battery is the secondary battery according to the fourth aspect, the battery module is the battery module according to the fifth aspect, or the battery pack is the battery pack according to the sixth aspect.

With features of the positive electrode active material of this application, the secondary battery, battery module, or battery pack including such positive electrode active material has high cycling performance and rate performance, thus providing high kinetic cycling stability and rate performance for the electric apparatus including the secondary battery, battery module, or battery pack of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

The accompanying drawings are not drawn to scale.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

The following specifically discloses embodiments of a positive electrode active material and a preparation method thereof, a positive electrode plate, a negative electrode plate, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combinations of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

A secondary battery, also referred to as a rechargeable battery or a storage battery, is a battery whose active material can be activated for continuous use through charging after the battery is discharged.

Normally, the secondary battery includes a positive electrode plate, a negative electrode plate, a separator, and an electrolyte. During charge and discharge process of the battery, active ions (for example, lithium ions) are intercalated and deintercalated between the positive electrode plate and the negative electrode plate. The separator is disposed between the positive electrode plate and the negative electrode plate to mainly prevent a short circuit between positive and negative electrodes and to allow the active ions to pass through. The electrolyte is between the positive electrode plate and the negative electrode plate, playing a role of conducting active ions.

### [Positive electrode active material]

An embodiment of this application provides a positive electrode active material including a core and a shell layer enveloping the core, the core having a chemical formula LiₐAₓMn_{1-y}B_{y}P_{1-z}C_{z}O₄ₙDₙ, where A includes one or more elements selected from a group consisting of Zn, Al, Na, K, Mg, Nb, Mo, and W, B includes one or more elements selected from a group consisting of Ti, V, Zr, Fe, Ni, Mg, Co, Ga, Sn, Sb, Nb, and Ge, C includes one or more elements selected from a group consisting of B (boron), S, Si, and N, D includes one or more elements selected from a group consisting of S, F, Cl, and Br,
a is selected from a range of 0.9 to 1.1, for example, 0.97, 0.977, 0.984, 0.988, 0.99, 0.991, 0.992, 0.993, 0.994, 0.995, 0.996, 0.997, 0.998, or 1.01, x is selected from a range of 0.001 to 0.1, for example, 0.001 or 0.005, y is selected from a range of 0.001 to 0.5, for example, 0.001, 0.005, 0.02, 0.05, 0.1, 0.15, 0.2, 0.25, 0.3, 0.34, 0.345, 0.349, 0.35, or 0.4, z is selected from a range of 0.001 to 0.1, for example, 0.001, 0.005, 0.08, or 0.1, n is selected from a range of 0.001 to 0.1, for example, 0.001, 0.005, 0.08, or 0.1, and the positive electrode active material is electrically neutral; and the shell layer is a doped carbon layer, a doping element in the doped carbon layer including any one or more selected from a group consisting of nitrogen, phosphorus, sulfur, boron, and fluorine.

Unless otherwise stated, in the foregoing chemical formula, when A is more than two elements, the foregoing limitation on the value range of x is not only a limitation on a stoichiometric number of each element as A but also a limitation on a sum of stoichiometric numbers of all the elements as A. For example, when A is more than two elements, Al, A2, ..., and An, stoichiometric numbers x1, x2, ..., and xn of all of A1, A2, ..., and An are each required to fall within the value range of x specified in this application, and a sum of x1, x2, ..., and xn are also required to fall within this value range. Similarly, for cases in which B, C, and D each are more than two elements, the limitations on the value ranges of the stoichiometric numbers of B, C, and D in this application also have the above meaning.

The positive electrode active material of this application is obtained by elemental doping in a compound LiMnPO₄, where A, B, C, and D are elements doping at the Li site, Mn site, P site, and O site of the compound LiMnPO₄ respectively. Without wishing to be confined to theories, it is now considered that performance improvement of lithium manganese phosphate is related to reduction of lattice change rate and surface activity of lithium manganese phosphate during deintercalation or intercalation of lithium. Reduced lattice change rate can lead to reduced difference of lattice constants between two phases at a crystal boundary, reduced interfacial stress, and enhanced transport capacity of Li⁺ at an interface, thereby improving rate performance of the positive electrode active material. In addition, high surface activity easily leads to serious interfacial side reactions, exacerbating gas production, electrolyte consumption, and damage of interface, thereby affecting performance of the battery in terms of cycling and the like. In this application, the lattice change rate is reduced through doping at the Li and Mn sites. Doping at the Mn site also effectively reduces the surface activity, thereby suppressing Mn dissolution and the interfacial side reactions between the positive electrode active material and the electrolyte. Doping at the P site makes a change rate of Mn-O bond length faster and lowers a small-polaron migration barrier, which is beneficial to the electronic conductivity. Doping at the O site has a good effect on reducing the interfacial side reactions. Doping at the P and O sites also affects the Mn dissolution in the antisite defects and kinetic performance. Therefore, doping reduces the antisite defect concentration in the material, improves the kinetic performance and gram capacity of the material, and also changes the morphology of particles, thereby increasing the compacted density.

In this way, in this application, with simultaneous doping of a specific amount of a specific element at Li, Mn, P, and O sites of the compound LiMnPO₄, significantly improved rate performance can be obtained, while the dissolution of Mn and the element doping at the Mn site is significantly reduced, significantly improved cycling performance and/or high-temperature stability is obtained, and the gram capacity and compacted density of the material can also be improved. In addition, introducing doping element atoms into the shell layer alters the charge distribution around carbon atoms, improving the electrical conductivity of the shell layer. Additionally, the doping element atoms create a defect structure within the carbon material, facilitating the rapid migration of lithium ions. Further, the doping element atoms generate a new functional group containing the doping element on the carbon surface, thereby forming new active sites, increasing the solvation and desolvation speed of lithium ions, and thus improving the capacity and rate performance.

In some embodiments of the first aspect, based on a weight of the core, an application amount of the doped carbon layer is greater than 0wt% and less than or equal to 6wt%, optionally from 3wt% to 5wt%. Controlling the application amount of the doped carbon layer within the foregoing range not only fully utilizes the conductivity of the doped carbon layer but also avoids the defect of excessively long lithium ion transport path caused by an excessive application amount.

Although the doped carbon layer has an advantage of better electrical conductivity over a pure carbon layer, a higher percentage of the doping element in the doped carbon layer means a more active shell layer. In some embodiments of the first aspect, the mass percentage of the doping element in the doped carbon layer is below 30%; and optionally, the mass percentage of the doping element in the doped carbon layer is below 20%. The doping element within the foregoing percentage range can effectively improve the electrical conductivity of the pure carbon layer and effectively avoids excessive surface activity caused by adding an excessive amount of the doping element, thereby effectively controlling interfacial side reactions caused by excessive doping of the coating layer.

The doping elements in the shell layer of the positive electrode active material in this application may be a single type of element or a combination of multiple types of elements. Because different elements have different conductivities and capabilities of forming surface defects, to more precisely adjust the performance of the doped carbon layer, in any embodiment of the first aspect, optionally, the doping element is nitrogen, phosphorus, sulfur, boron, or fluorine. Selecting a single type of element as the doping element helps to control the performance of the doped carbon layer.

Furthermore, because different types of doping elements have different conductivities and capabilities of forming surface defects, to fully utilize the effects of the doping elements, experiments are conducted to determine the percentages of different types of doping elements.

In any embodiment of the first aspect, optionally, the doping element is element nitrogen or element sulfur, and a mass percentage of the doping element in the doped carbon layer is 1% to 15%. Nitrogen atoms and sulfur atoms have an atomic radius closer to that of carbon atoms and are unlikely to destroy the carbon skeleton. Therefore, with the doping amount of nitrogen or sulfur atoms falling within the foregoing relatively wide range, the electrical conductivity of the doped carbon layer can be fully utilized, and the lithium ion transport and lithium ion desolvation capacity can be increased.

In any embodiment of the first aspect, optionally, the doping element is element phosphorus, element boron, or element fluorine, and a mass percentage of the doping element in the doped carbon layer is 0.5% to 5%. Phosphorus atoms, boron atoms, and fluorine atoms have an atomic radius different from carbon atoms and are likely to destroy the carbon skeleton in a case of excessive doping. Therefore, with the doping amount of phosphorus, boron, and fluorine atoms falling within the foregoing relatively narrow range, the electrical conductivity of the doped carbon layer can be fully utilized, and the lithium ion transport and lithium ion desolvation capacity can be increased.

In some embodiments of the first aspect, A, C, and D in the positive electrode active material are each independently any one element within their respective ranges described above, and B is at least two elements. In this way, the compositions of the positive electrode active material can be more easily and accurately controlled.

Optionally, A is any one element selected from Mg and Nb. Selecting the element doping at the Li site within the foregoing range can further reduce the lattice change rate during deintercalation of lithium, thereby further improving the rate performance of the battery.

Optionally, B is at least two elements selected from a group consisting of Fe, Ti, V, Co, and Mg, optionally Fe and more than one element selected from a group consisting of Ti, V, Co, and Mg. Selecting the element doping at the Mn site within the foregoing range can further increase the electronic conductivity and further reduce the lattice change rate, thereby improving the rate performance and gram capacity of the battery.

Optionally, C is S. Selecting the element doping at the P site within the foregoing range can further improve the rate performance of the battery.

Optionally, D is F. Selecting the element doping at the O site within the foregoing range can further mitigate the interfacial side reactions, thereby improving the high-temperature performance of the battery.

In some embodiments of the first aspect, x is selected from a range of 0.001 to 0.005 (for example, 0.001, 0.002, 0.003, 0.004, or 0.005); and/or y is selected from a range of 0.01 to 0.5 (for example, 0.01, 0.05, 0.1, 0.2, 0.25, 0.3, 0.35, 0.4, 0.45, or 0.5), optionally from a range of 0.25 to 0.5; and/or z is selected from a range of 0.001 to 0.005 (for example, 0.001, 0.002, 0.003, 0.004, or 0.005); and/or n is selected from a range of 0.001 to 0.005 (for example, 0.001, 0.002, 0.003, 0.004, or 0.005). Selecting the value of y within the foregoing range can further improve the gram capacity and rate performance of the material. Selecting the value of y within the foregoing range can further improve the kinetic performance of the material. Selecting the value of z within the foregoing range can further improve the rate performance of the secondary battery. Selecting the value of n within the foregoing range can further improve the high-temperature performance of the secondary battery.

In some embodiments of the first aspect, the positive electrode active material satisfies the following: (1-y):y is within a range of 1 to 4, optionally within a range of 1.5 to 3, and a:x is within a range of 9 to 1100, optionally within a range of 190 to 998. Herein, y denotes a sum of stoichiometric numbers of elements doping at the Mn site. The energy density and cycling performance of the positive electrode active material can be further improved when the preceding conditions are met.

In some embodiments of the first aspect, a lattice change rate of the core is below 8%, and optionally, the lattice change rate is below 4%. Reducing the lattice change rate can make Li ion transport easier, that is, increasing migration capability of Li ions in the material, which is conducive to improving the rate performance of the secondary battery. The lattice change rate can be measured in a method known in the art, for example, X-ray diffraction (XRD) pattern.

In some embodiments of the first aspect, a Li/Mn antisite defect concentration of the positive electrode active material is below 2%, and optionally, the Li/Mn antisite defect concentration is below 0.5%. The Li/Mn antisite defect refers to site exchange of Li⁺ and Mn²⁺ in LiMnPO₄ lattice. The Li/Mn antisite defect concentration refers to a percentage of Li⁺ interchanged with Mn²⁺ in the total amount of Li⁺ in the positive electrode active material. The Mn²⁺ antisite defect hinders the Li⁺ transport, and decreasing the Li/Mn antisite defect concentration is conducive to improving the gram capacity and rate performance of the positive electrode active material. The Li/Mn antisite defect concentration can be measured in a method known in the art, for example, XRD.

In some embodiments of the first aspect, a surface oxygen valence of the positive electrode active material is below -1.82, optionally from -1.89 to -1.98. Reducing the surface oxygen valence can mitigate the interfacial side reactions between the positive electrode active material and the electrolyte, thereby improving the cycling performance and high-temperature stability of the secondary battery. The surface oxygen valence can be measured in a method known in the art, for example, electron energy loss spectroscopy (EELS).

In some embodiments of the first aspect, a compacted density under 3T (tons) of the positive electrode active material is above 2.0 g/cm³, optionally above 2.2 g/cm³. Higher compacted density indicates larger weight of active material per unit volume. Therefore, increasing the compacted density is conducive to increasing the volumetric energy density of the cell. The compacted density can be measured according to GB/T 24533-2009.

The following describes a preparation method of the positive electrode active material of this application, but the following description is merely for illustrative purposes, and persons skilled in the art can use other methods that can be implemented to prepare the positive electrode active material of this application.

In some embodiments, the preparation method of the positive electrode active material includes: step (1): dissolving a manganese source, a source of element B, and an acid in a solvent and stirring to generate a suspension of a manganese salt doped with element B, and filtering the suspension and drying a filter cake to obtain the manganese salt doped with element B; step (2): adding a lithium source, a phosphorus source, a source of element A, a source of element C, a source of element D, a carbon source, a source of a doping element in a carbon layer, a solvent, and the manganese salt doped with element B obtained in step (1) into a reaction vessel for grinding and mixing to obtain a slurry; step (3): transferring the slurry obtained in step (2) to a spray drying device for spray drying and granulation to obtain particles; and step (4): sintering the particles obtained in step (3) to obtain the positive electrode active material. The amounts of sources of elements A, B, C, and D added each depend on a target doping amount, and the ratio of amounts of the lithium, manganese, and phosphorus sources conforms to the stoichiometric ratio.

In some embodiments, the acid in step (1) is selected from one or more of hydrochloric acid, sulfuric acid, nitric acid, phosphoric acid, organic acid such as oxalic acid, and the like, for example, it may be oxalic acid. In some embodiments, the acid is a dilute acid with a concentration below 60wt%.

In some embodiments, the manganese source in step (1) may be a manganese-containing substance known in the art that can be used for preparing lithium manganese phosphate. For example, the manganese source may be selected from one of elemental manganese, manganese dioxide, manganese phosphate, manganese oxalate, manganese carbonate, or a combination thereof.

In some embodiments, the lithium source in step (2) may be a lithium-containing substance known in the art that can be used for preparing lithium manganese phosphate. For example, the lithium source may be selected from one of lithium carbonate, lithium hydroxide, lithium phosphate, and lithium dihydrogen phosphate, or a combination thereof.

In some embodiments, the phosphorus source in step (2) may be a phosphorus-containing substance known in the art that can be used for preparing lithium manganese phosphate. For example, the phosphorus source may be selected from one of diammonium hydrogen phosphate, ammonium dihydrogen phosphate, ammonium phosphate, and phosphoric acid, or a combination thereof.

Optionally, the source of element A is selected from at least one of a group consisting of elementary substance, oxide, phosphate, oxalate, carbonate, and sulfate of element A; the source of element B is selected from at least one of a group consisting of elementary substance, oxide, phosphate, oxalate, carbonate, and sulfate of element B; the source of element C is selected from at least one of a group consisting of sulfate, borate, nitrate, and silicate of element C; the source of element D is selected from at least one of a group consisting of elementary substance and ammonium salt of element D; the carbon source is selected from one or more from a group consisting of starch, sucrose, glucose, cellulose, polyvinyl alcohol, polyethylene glycol, sodium carboxymethyl cellulose, citric acid, lactic acid, and succinic acid; the source of the doping element in the carbon layer is selected from one or more from a group consisting of a source of element nitrogen, a source of element phosphorus, a source of element sulfur, a source of element boron, and a source of element fluorine; the source of element nitrogen is selected from any one or more from a group consisting of ethylenediamine, melamine, benzylamine, acetonitrile, aminated sucrose, pyrrole, aniline, acrylonitrile, polyimide acid, and a nitrogen-containing aliphatic heterocyclic compound; the source of element phosphorus is selected from any one or more from a group consisting of elemental phosphorus, phosphorus pentoxide, ammonium dihydrogen phosphate, ammonium phosphate, phosphoric acid, hypophosphorous acid, phosphorous acid, metaphosphoric acid, pyrophosphoric acid, polyphosphoric acid, phytic acid, phosphorus trichloride, phosphorus pentachloride, phosphorus tribromide, triphenoxyphos, triphenylphosphine, and tributylphosphine; the source of element sulfur is selected from any one or more from a group consisting of sulfur powder, sulfuric acid, sulfurous acid, ammonium sulfate, thiophene, thiazole, thiourea, dimethyl sulfoxide, thioacetamide, and mercaptan; the source of element boron is selected from any one or more from a group consisting of elemental boron, boric acid, diboron trioxide, boron nitride, trimethyl borate, sodium tetraphenylborate, and boron trichloride; and the source of element fluorine is selected from any one of a group consisting of hydrofluoric acid, ammonium fluoride, and a fluorine-containing organic substance, the fluorine-containing organic substance being selected from any one of fluorine-containing alkane, fluorine-containing olefin, fluorine-containing aromatic hydrocarbon, and fluorine-containing carboxylic acid. Selecting the source of each doping element can improve distribution uniformity of the doping element, thereby improving the performance of the material.

The foregoing fluorine-containing organic substance may be further selected from any one or more from a group consisting of difluoromethane, difluoroethane, polytrifluoroethylene, polytetrafluoroethylene, polyvinylidene fluoride, polyvinyl fluoride, and the like.

In some embodiments, the solvents in step (1) and step (2) may each independently be solvents commonly used by persons skilled in the art during preparation of the manganese salt and lithium manganese phosphate, for example, they may each independently be selected from at least one of ethanol, water (for example, deionized water), and the like.

In some embodiments, the stirring in step (1) is performed at a temperature within a range of 60°C to 120°C. In some embodiments, the stirring in step (1) is performed at a stirring speed of 200 rpm to 800 rpm, 300 rpm to 800 rpm, or 400 rpm to 800 rpm. In some embodiments, the stirring in step (1) are performed for 6 hours to 12 hours. In some embodiments, the grinding and mixing in step (2) are performed for 8 hours to 15 hours.

Controlling the reaction temperature, stirring speed, and mixing time during doping allows for uniform distribution of the doping element and higher crystallinity of the material after sintering, thereby improving the gram capacity and rate performance of the material.

In some embodiments, in step (1), the filter cake may be washed before the filter cake is dried.

In some embodiments, the drying in step (1) may be performed in methods and conditions known to persons skilled in the art, for example, the drying temperature may be within a range of 120°C to 300°C. Optionally, the filter cake after drying may be ground into particles, for example, ground until a median particle size Dᵥ50 of the particles is within a range of 50 nm to 200 nm. The median particle size Dᵥ50 refers to a corresponding particle size when the cumulative volume distribution percentage of the positive electrode active material reaches 50%. In this application, the median particle size Dᵥ50 of the positive electrode active material may be determined in a laser diffraction particle size analyzing method. For example, the median particle size Dᵥ50 is determined using a laser particle size analyzer (for example, Malvern Master Size 3000) with reference to the standard GB/T 19077-2016.

In some embodiments, in step (2), an amount of the carbon source used relative to an amount of the lithium source is typically within a molar ratio range of 0.1% to 5%. The grinding in step (2) may be performed in a suitable grinding method known in the art, for example, performed by sanding.

The temperature and time for the spray drying in step (3) may be conventional temperature and time for spray drying in the art, for example, the spray drying is performed at 100°C to 300°C for 1 hour to 6 hours.

In some embodiments, the sintering is performed for 6 hours to 14 hours at a temperature within a range of 600°C to 900°C. Controlling the sintering temperature and time can control the crystallinity of the material and reduce the dissolution amount of Mn and the element doping at the Mn site after cycling of the positive electrode active material, thereby improving the high-temperature stability and cycling performance of the battery.

In some embodiments, the sintering is performed under a protective atmosphere, and the protective atmosphere may be nitrogen, an inert gas or a mixture thereof, or a mixture of the protective atmosphere and hydrogen.

### [Positive electrode plate]

A third aspect of this application provides a positive electrode plate including a positive electrode current collector and a positive electrode film layer disposed on at least one surface of the positive electrode current collector, where the positive electrode film layer includes any one positive electrode active material according to the first aspect or a positive electrode active material prepared using any one preparation method according to the second aspect; and based on a total weight of the positive electrode film layer, a percentage of the positive electrode active material in the positive electrode film layer is above 10wt%, optionally from 95wt% to 99.5wt%.

For example, the positive electrode current collector has two opposite surfaces in its thickness direction, and the positive electrode film layer is provided on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may alternatively be a well-known positive electrode active material used for batteries in the art. For example, the positive electrode active material may alternatively include at least one of the following materials: olivine-structured lithium-containing phosphate, lithium transition metal oxide, and their respective modified compounds thereof. However, this application is not limited to these materials, but may use other conventional materials that can be used as positive electrode active materials for batteries instead. One type of these positive electrode active materials may be used alone, or two or more types may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

A negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One type of these negative electrode active materials may be used alone, or two or more types may be used in combination.

In some embodiments, the negative electrode film layer further optionally includes a binder. For example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

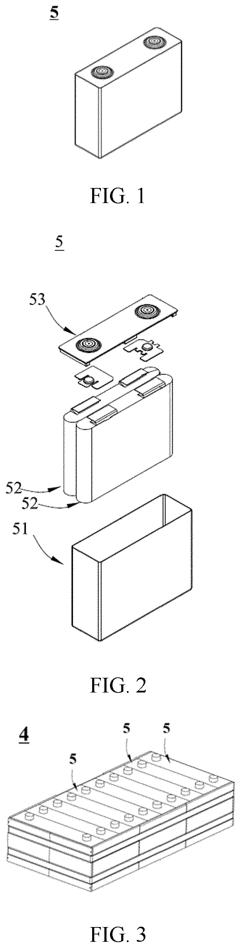

The secondary battery is not limited to any specific shape in this application, and the secondary battery may be cylindrical, rectangular, or of any other shape. For example, FIG. 1 shows a rectangular secondary battery 5 as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. The specific quantity may be chosen by persons skilled in the art based on use and capacity of the battery module.

FIG. 3 shows a battery module 4 as an example. Referring to FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fixed by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

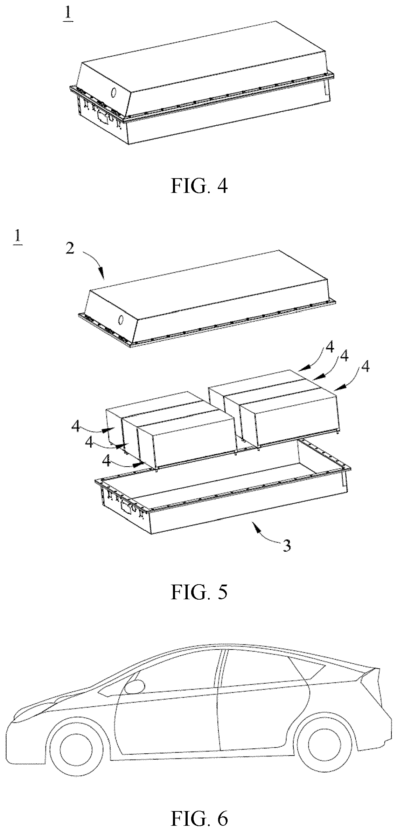

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of positive electrode active material

**Preparation of doped manganese oxalate:** 1.3 mol of MnSO₄·H₂O and 0.7 mol of FeSO₄·H₂O were mixed well in a mixer for 6 hours. The resulting mixture was transferred to a reactor, and 10 L of deionized water and 2 mol of oxalic acid dihydrate (denoted as oxalic acid) were added. The reactor was heated to 80°C, and stirring was performed for 6 hours at a rotation speed of 600 rpm until the reaction ended (no bubbles were generated), to obtain an Fe-doped manganese oxalate suspension. Then, the suspension was filtered and the resulting filter cake was dried at 120°C and then ground to obtain Fe-doped manganese oxalate particles with a median particle size Dᵥ50 of approximately 100 nm.

**Preparation of doped lithium manganese phosphate:** 1 mol of the manganese oxalate particles, 0.497 mol of lithium carbonate, 0.001 mol of Mo(SO₄)₃, an aqueous phosphoric acid solution containing 0.999 mol of phosphoric acid with a concentration of 85%, 0.001 mol of H₄SiO₄, 0.0005 mol of NH₄HF₂, 0.05 mol of sucrose, and 0.025 mol of ethylenediamine were added to 20 L of deionized water. The resulting mixture was transferred to a sand mill and fully ground and stirred for 10 hours to obtain a slurry. The slurry was transferred to a spray drying device for spray drying and granulation, with the drying temperature set to 250°C and the drying time set to 4 hours, to obtain particles. In a protective atmosphere of nitrogen (90vol%)+hydrogen (10vol%), the powder material was sintered at 700°C for 10 hours to obtain Li_{0.994}Mo_{0.001}Mn_{0.65}Fe_{0.35}P_{0.999}Si_{0.001}O_{3.999}F_{0.001} coated with a doped carbon layer.

### (2) Preparation of button cell

The positive electrode active material, polyvinylidene fluoride (PVDF), and acetylene black were added at a weight ratio of 90:5:5 to N-methylpyrrolidone (NMP), and stirred in a drying room to obtain a slurry. The slurry was applied onto an aluminum foil, followed by drying and cold pressing, to obtain a positive electrode plate. An application amount was 0.2 g/cm², and a compacted density was 2.0 g/cm³.

A lithium sheet used as a negative electrode, a solution containing ethylene carbonate (EC), diethyl carbonate (DEC), and dimethyl carbonate (DMC) at a volume ratio of 1:1:1 and 1 mol/L LiPF₆ used as an electrolyte, and the prepared positive electrode plate were assembled together in a button cell box to form a button cell (also referred to as "button battery" hereafter).

### (3) Preparation of full cell

The positive electrode active material, a conductive agent acetylene black, and a binder polyvinylidene difluoride (PVDF) were mixed well at a weight ratio of 92:2.5:5.5 in an N-methylpyrrolidone solvent system, and then the resulting mixture was applied onto an aluminum foil, followed by drying and cold pressing, to obtain a positive electrode plate. An application amount was 0.4 g/cm², and a compacted density was 2.4 g/cm³.

A negative electrode active material artificial graphite, hard carbon, a conductive agent acetylene black, a binder styrene-butadiene rubber (SBR), and a thickener sodium carboxymethyl cellulose (CMC) were mixed well at a weight ratio of 90:5:2:2:1 in deionized water, and then the resulting mixture was applied onto a copper foil, followed by drying and cold pressing, to obtain a negative electrode plate. An application amount was 0.2 g/cm², and a compacted density was 1.7 g/cm³.

A polyethylene (PE) porous polymeric film was used as a separator; the positive electrode plate, the separator, and the negative electrode plate were stacked in sequence, so that the separator was located between the positive electrode plate and the negative electrode plate for separation; and the resulting stack was wound to obtain a jelly roll. The jelly roll was placed in an outer package, an electrolyte that was the same as the electrolyte used during preparation of the button cell was injected, and the outer package was sealed to obtain a full cell (also referred to as "full battery" hereinafter).

### Example 2

This example was the same as example 1 except that in "(1) preparation of positive electrode active material", the amount of high-purity Li₂CO₃ was changed to 0.4885 mol, M_{O}(SO₄)₃ was replaced with MgSO₄, and the amount of FeSO₄·H₂O was changed to 0.68 mol, and that during preparation of doped manganese oxalate, 0.02 mol of Ti(SO₄)₂ was also added and H₄SiO₄ was replaced with HNO₃.

### Example 3

This example was the same as example 1 except that in "(1) preparation of positive electrode active material", the amount of high-purity Li₂CO₃ was changed to 0.496 mol, Mo(SO₄)₃ was replaced with W(SO₄)₃, and H₄SiO₄ was replaced with H₂SO₄.

### Example 4

This example was the same as example 1 except that in "(1) preparation of positive electrode active material", the amount of high-purity Li₂CO₃ was changed to 0.4985 mol, 0.001 mol of M_{O}(SO₄)₃ was replaced with 0.0005 mol of Al₂(SO₄)₃, and NH₄HF₂ was replaced with NH₄HCl₂.

### Example 5

This example was the same as example 1 except that in "(1) preparation of positive electrode active material", the amount of FeSO₄·H₂O was changed from 0.7 mol to 0.69 mol, and that during preparation of doped manganese oxalate, 0.01 mol of VCl₂ was also added, the amount of Li₂CO₃ was changed to 0.4965 mol, 0.001 mol of M_{O}(SO₄)₃ was replaced with 0.0005 mol of Nb₂(SO₄)₅, and H₄SiO₄ was replaced with H₂SO₄.

### Example 6

This example was the same as example 1 except that in "(1) preparation of positive electrode active material", the amount of FeSO₄·H₂O was changed to 0.68 mol, and that during preparation of doped manganese oxalate, 0.01 mol of VCl₂ and 0.01 mol of MgSO₄ were also added, the amount of Li₂CO₃ was changed to 0.4965 mol, 0.001 mol of M_{O}(SO₄)₃ was replaced with 0.0005 mol of Nb₂(SO₄)₅, and H₄SiO₄ was replaced with H₂SO₄.

### Example 7

This example was the same as example 6 except that in "(1) preparation of positive electrode active material", MgSO₄ was replaced with CoSO₄.

### Example 8

This example was the same as example 6 except that in "(1) preparation of positive electrode active material", MgSO₄ was replaced with NiSO₄.

### Example 9

This example was the same as example 1 except that in "(1) preparation of positive electrode active material", the amount of FeSO₄·H₂O was changed to 0.698 mol, and that during preparation of doped manganese oxalate, 0.002mol of Ti(SO₄)₂ was also added, the amount of Li₂CO₃ was changed to 0.4955 mol, 0.001 mol of M_{O}(SO₄)₃ was replaced with 0.0005 mol of Nb₂(SO₄)₅, H₄SiO₄ was replaced with H₂SO₄, and NH₄HF₂ was replaced with NH₄HCl₂.

### Example 10

This example was the same as example 1 except that in "(1) preparation of positive electrode active material", the amount of FeSO₄·H₂O was changed to 0.68 mol, and that during preparation of doped manganese oxalate, 0.01 mol of VCl₂ and 0.01 mol of MgSO₄ were also added, the amount of Li₂CO₃ was changed to 0.4975 mol, 0.001 mol of M_{O}(SO₄)₃ was replaced with 0.0005 mol of Nb₂(SO₄)₅, and NH₄HF₂ was replaced with NH₄HBr₂.

### Example 11

This example was the same as example 1 except that in "(1) preparation of positive electrode active material", the amount of FeSO₄·H₂O was changed to 0.69 mol, and that during preparation of doped manganese oxalate, 0.01 mol of VCl₂ was also added, the amount of Li₂CO₃ was changed to 0.499 mol, Mo(SO₄)₃ was replaced with MgSO₄, and NH₄HF₂ was replaced with NH₄HBr₂.

### Example 12

This example was the same as example 1 except that in "(1) preparation of positive electrode active material", the amount of MnSO₄·H₂O was changed to 1.36 mol, and the amount of FeSO₄·H₂O was changed to 0.6 mol, and that during preparation of doped manganese oxalate, 0.04 mol of VCl₂ was also added, the amount of Li₂CO₃ was changed to 0.4985 mol, Mo(SO₄)₃ was replaced with MgSO₄, and H₄SiO₄ was replaced with HNO₃.

### Example 13

This example was the same as example 12 except that in "(1) preparation of positive electrode active material", the amount of MnSO₄·H₂O was changed to 1.16 mol, and the amount of FeSO₄·H₂O was changed to 0.8 mol.

### Example 14

This example was the same as example 12 except that in "(1) preparation of positive electrode active material", the amount of MnSO₄·H₂O was changed to 1.3 mol, and the amount of VCl₂ was changed to 0.1 mol.

### Example 15

This example was the same as example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.494 mol, 0.001 mol of M_{O}(SO₄)₃ was replaced with 0.005 mol of MgSO₄, and H₄SiO₄ was replaced with H₂SO₄.

### Example 16

This example was the same as example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.467 mol, 0.001 mol of M_{O}(SO₄)₃ was replaced with 0.005 mol of MgSO₄, 0.001 mol of H₄SiO₄ was replaced with 0.005 mol of H₂SO₄, and the amount of phosphoric acid with a concentration of 85% was changed from 1.175 mol to 1.171 mol.

### Example 17

This example was the same as example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.492 mol, 0.001 mol of M_{O}(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Example 18

This example was the same as example 1 except that in "(1) preparation of positive electrode active material", the amount of FeSO₄·H₂O was changed to 0.5 mol, and that during preparation of doped manganese oxalate, 0.1 mol of VCl₂ and 0.1 mol of CoSO₄ were also added, the amount of Li₂CO₃ was changed to 0.492 mol, 0.001 mol of M_{O}(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Example 19

This example was the same as example 18 except that in "(1) preparation of positive electrode active material", the amount of FeSO₄·H₂O was changed to 0.4 mol, and the amount of CoSO₄ was changed from 0.1 mol to 0.2 mol.

### Example 20

This example was the same as example 1 except that in "(1) preparation of positive electrode active material", the amount of MnSO₄·H₂O was changed to 1.5 mol, the amount of FeSO₄·H₂O was changed to 0.1 mol, and the amount of CoSO₄ was changed to 0.3 mol.

### Example 21

This example was the same as example 18 except that in "(1) preparation of positive electrode active material", 0.1 mol of CoSO₄ was replaced with 0.1 mol of NiSO₄.

### Example 22

This example was the same as example 18 except that in "(1) preparation of positive electrode active material", the amount of MnSO₄·H₂O was changed to 1.5 mol, the amount of FeSO₄·H₂O was changed to 0.2 mol, and 0.1 mol of CoSO₄ was replaced with 0.2 mol of NiSO₄.

### Example 23

This example was the same as example 18 except that in "(1) preparation of positive electrode active material", the amount of MnSO₄·H₂O was changed to 1.4 mol, the amount of FeSO₄·H₂O was changed to 0.3 mol, and the amount of CoSO₄ was changed to 0.2 mol.

### Example 24

This example was the same as example 1 except that in "(1) preparation of positive electrode active material", the amount of MnSO₄·H₂O was changed from 1.3 mol to 1.2 mol, and the amount of FeSO₄·H₂O was changed from 0.7 mol to 0.5 mol, and that during preparation of doped manganese oxalate, 0.1 mol of VCl₂ and 0.2 mol of CoSO₄ were also added, the amount of Li₂CO₃ was changed to 0.497 mol, 0.001 mol of M_{O}(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Example 25

This example was the same as example 18 except that in "(1) preparation of positive electrode active material", the amount of MnSO₄·H₂O was changed to 1.0 mol, the amount of FeSO₄·H₂O was changed to 0.7 mol, and the amount of CoSO₄ was changed to 0.2 mol.

### Example 26

This example was the same as example 1 except that in "(1) preparation of positive electrode active material", the amount of MnSO₄·H₂O was changed to 1.4 mol, and the amount of FeSO₄·H₂O was changed to 0.3 mol, and that during preparation of doped manganese oxalate, 0.1 mol of VCl₂ and 0.2 mol of CoSO₄ were also added, the amount of Li₂CO₃ was changed to 0.4825 mol, 0.001 mol of M_{O}(SO₄)₃ was replaced with 0.005 mol of MgSO₄, the amount of H₄SiO₄ was changed to 0.1 mol, the amount of phosphoric acid was changed to 0.9 mol, and the amount of NH₄HF₂ was changed to 0.04 mol.

### Example 27

This example was the same as example 1 except that in "(1) preparation of positive electrode active material", the amount of MnSO₄·H₂O was changed to 1.4 mol, and the amount of FeSO₄·H₂O was changed to 0.3 mol, and that during preparation of doped manganese oxalate, 0.1 mol of VCl₂ and 0.2 mol of CoSO₄ were also added, the amount of Li₂CO₃ was changed to 0.485 mol, 0.001 mol of M_{O}(SO₄)₃ was replaced with 0.005 mol of MgSO₄, the amount of H₄SiO₄ was changed to 0.08 mol, the amount of phosphoric acid was changed to 0.92 mol, and the amount of NH₄HF₂ was changed to 0.05 mol.

### Example 28

This example was the same as example 1 except that in "(1) preparation of positive electrode active material", the amount of ethylenediamine was changed to 0.0013 mol.

### Example 29

This example was the same as example 1 except that in "(1) preparation of positive electrode active material", the amount of ethylenediamine was changed to 0.0026 mol.

### Example 30

This example was the same as example 1 except that in "(1) preparation of positive electrode active material", the amount of ethylenediamine was changed to 0.0535 mol.

### Example 31

This example was the same as example 1 except that in "(1) preparation of positive electrode active material", the amount of ethylenediamine was changed to 0.0818 mol.

### Example 32

This example was the same as example 1 except that in "(1) preparation of positive electrode active material", the amount of ethylenediamine was changed to 0.12 mol.

### Example 33

This example was the same as example 1 except that in "(1) preparation of positive electrode active material", the amount of ethylenediamine was changed to 0.2571 mol.

### Example 34

This example was the same as example 1 except that in "(1) preparation of positive electrode active material", 0.025 mol of ethylenediamine was replaced with 0.0005 mol of phosphoric acid (whose source was phosphoric acid with a mass fraction of 85%, and the following phosphoric acid sources were all the same as the phosphoric acid with the mass fraction of 85%).

### Example 35

This example was the same as example 1 except that in "(1) preparation of positive electrode active material", 0.025 mol of ethylenediamine was replaced with 0.0012 mol of phosphoric acid.

### Example 36

This example was the same as example 1 except that in "(1) preparation of positive electrode active material", 0.025 mol of ethylenediamine was replaced with 0.0072 mol of phosphoric acid.

### Example 37

This example was the same as example 1 except that in "(1) preparation of positive electrode active material", 0.025 mol of ethylenediamine was replaced with 0.0122 mol of phosphoric acid.

### Example 38

This example was the same as example 1 except that in "(1) preparation of positive electrode active material", 0.025 mol of ethylenediamine was replaced with 0.0202 mol of phosphoric acid.

### Example 39

This example was the same as example 1 except that in "(1) preparation of positive electrode active material", 0.025 mol of ethylenediamine was replaced with 0.0317 mol of phosphoric acid.

### Example 40

This example was the same as example 1 except that in "(1) preparation of positive electrode active material", 0.025 mol of ethylenediamine was replaced with 0.0581 mol of phosphoric acid.

### Example 41

This example was the same as example 1 except that in "(1) preparation of positive electrode active material", 0.025 mol of ethylenediamine was replaced with 0.0011 mol of sulfuric acid (whose source was sulfuric acid with a mass fraction of 60%, and the following sulfuric acid sources were all the same as the sulfuric acid with the mass fraction of 60%).

### Example 42

This example was the same as example 1 except that in "(1) preparation of positive electrode active material", 0.025 mol of ethylenediamine was replaced with 0.0023 mol of sulfuric acid.

### Example 43

This example was the same as example 1 except that in "(1) preparation of positive electrode active material", 0.025 mol of ethylenediamine was replaced with 0.0196 mol of sulfuric acid.

### Example 44

This example was the same as example 1 except that in "(1) preparation of positive electrode active material", 0.025 mol of ethylenediamine was replaced with 0.0397 mol of sulfuric acid.

### Example 45

This example was the same as example 1 except that in "(1) preparation of positive electrode active material", 0.025 mol of ethylenediamine was replaced with 0.0563 mol of sulfuric acid.

### Example 46

This example was the same as example 1 except that in "(1) preparation of positive electrode active material", 0.025 mol of ethylenediamine was replaced with 0.075mol of sulfuric acid.

### Example 47

This example was the same as example 1 except that in "(1) preparation of positive electrode active material", 0.025 mol of ethylenediamine was replaced with 0.1212 mol of sulfuric acid.

### Example 48

This example was the same as example 1 except that in "(1) preparation of positive electrode active material", 0.025 mol of ethylenediamine was replaced with 0.0013 mol of boric acid.

### Example 49

This example was the same as example 1 except that in "(1) preparation of positive electrode active material", 0.025 mol of ethylenediamine was replaced with 0.0033 mol of boric acid.

### Example 50

This example was the same as example 1 except that in "(1) preparation of positive electrode active material", 0.025 mol of ethylenediamine was replaced with 0.0202mol of boric acid.

### Example 51

This example was the same as example 1 except that in "(1) preparation of positive electrode active material", 0.025 mol of ethylenediamine was replaced with 0.0344 mol of boric acid.

### Example 52

This example was the same as example 1 except that in "(1) preparation of positive electrode active material", 0.025 mol of ethylenediamine was replaced with 0.0569 mol of boric acid.

### Example 53

This example was the same as example 1 except that in "(1) preparation of positive electrode active material", 0.025 mol of ethylenediamine was replaced with 0.0893 mol of boric acid.

### Example 54

This example was the same as example 1 except that in "(1) preparation of positive electrode active material", 0.025 mol of ethylenediamine was replaced with 0.1636 mol of boric acid.

### Example 55

This example was the same as example 1 except that in "(1) preparation of positive electrode active material", 0.025 mol of ethylenediamine was replaced with 0.0008 mol of hydrogen fluoride (whose source was hydrofluoric acid with a mass fraction of 40%, and the following hydrogen fluoride sources were all the same as the hydrofluoric acid with the mass fraction of 40%).

### Example 56

This example was the same as example 1 except that in "(1) preparation of positive electrode active material", 0.025 mol of ethylenediamine was replaced with 0.0019 mol of hydrogen fluoride.

### Example 57

This example was the same as example 1 except that in "(1) preparation of positive electrode active material", 0.025 mol of ethylenediamine was replaced with 0.0117 mol of hydrogen fluoride.

### Example 58

This example was the same as example 1 except that in "(1) preparation of positive electrode active material", 0.025 mol of ethylenediamine was replaced with 0.0199 mol of hydrogen fluoride.

### Example 59

This example was the same as example 1 except that in "(1) preparation of positive electrode active material", 0.025 mol of ethylenediamine was replaced with 0.033 mol of hydrogen fluoride.

### Example 60

This example was the same as example 1 except that in "(1) preparation of positive electrode active material", 0.025 mol of ethylenediamine was replaced with 0.0517 mol of hydrogen fluoride.

### Example 61

This example was the same as example 1 except that in "(1) preparation of positive electrode active material", 0.025 mol of ethylenediamine was replaced with 0.0947 mol of hydrogen fluoride.

### Comparative example 1

**Preparation of manganese oxalate:** 1 mol of MnSO₄·H₂O was added into a reactor, and 10 L of deionized water and 1 mol of oxalic acid dihydrate (denoted as oxalic acid) were added. The reactor was heated to 80°C, and stirring was performed for 6 hours at a rotation speed of 600 rpm until the reaction ended (no bubbles were generated), to obtain a manganese oxalate suspension. Then, the suspension was filtered and the resulting filter cake was dried at 120°C and then ground to obtain manganese oxalate particles with a median particle size Dᵥ50 of 50 nm to 200 nm.

**Preparation of lithium manganese phosphate:** 1 mol of the manganese oxalate particles, 0.5 mol of lithium carbonate, an aqueous phosphoric acid solution containing 1 mol of phosphoric acid with a concentration of 85%, 0.05 mol of sucrose, and 0.025 mol of ethylenediamine were added to 20 L of deionized water. The mixture was transferred to a sand mill and fully ground and stirred for 10 hours to obtain a slurry. The slurry was transferred to a spray drying device for spray drying and granulation, with the drying temperature set to 250°C and the drying time set to 4 hours, to obtain particles. In a protective atmosphere of nitrogen (90vol%)+hydrogen (10vol%), the powder material was sintered at 700°C for 10 hours to obtain LiMnPO₄ coated with carbon.

### Comparative example 2

This example was the same as comparative example 1 except that 1 mol of MnSO₄·H₂O in comparative example 1 was replaced with 0.85 mol of MnSO₄·H₂O and 0.15 mol of FeSO₄·H₂O, and these materials were added into a mixer and mixed well for 6 hours and then added into a reactor.

### Comparative example 3

This example was the same as example 1 except that in "(1) preparation of positive electrode active material", the amount of MnSO₄·H₂O was changed to 1.9 mol, 0.7 mol of FeSO₄·H₂O was replaced with 0.1 mol of ZnSO₄, the amount of Li₂CO₃ was changed to 0.495 mol, 0.001 mol of M_{O}(SO₄)₃ was replaced with 0.005 mol of MgSO₄, the amount of phosphoric acid was changed to 1 mol, and neither H₄SiO₄ nor NH₄HF₂ was added.

### Comparative example 4

This example was the same as example 1 except that in "(1) preparation of positive electrode active material", the amount of MnSO₄·H₂O was changed to 1.2 mol, the amount of FeSO₄·H₂O was changed to 0.8 mol, the amount of Li₂CO₃ was changed to 0.45 mol, 0.001 mol of M_{O}(SO₄)₃ was replaced with 0.005 mol of Nb₂(SO₄)₅, the amount of phosphoric acid was changed from 0.999 mol to 1 mol, the amount of NH₄HF₂ was changed from 0.0005 mol to 0.025 mol, and no H₄SiO₄ was added.

### Comparative example 5

This example was the same as example 1 except that in "(1) preparation of positive electrode active material", the amount of MnSO₄·H₂O was changed to 1.4 mol, the amount of FeSO₄·H₂O was changed to 0.6 mol, the amount of Li₂CO₃ was changed to 0.38 mol, and 0.001 mol of M_{O}(SO₄)₃ was replaced with 0.12 mol of MgSO₄.

### Comparative example 6

This example was the same as example 1 except that in "(1) preparation of positive electrode active material", the amount of MnSO₄·H₂O was changed to 0.8 mol, 0.7 mol of FeSO₄·H₂O was replaced with 1.2 mol of ZnSO₄, the amount of Li₂CO₃ was changed to 0.499 mol, and 0.001 mol of Mo(SO₄)₃ was replaced with 0.001 mol of MgSO₄.

### Comparative example 7

This example was the same as example 1 except that in "(1) preparation of positive electrode active material", the amount of MnSO₄·H₂O was changed to 1.4 mol, the amount of FeSO₄·H₂O was changed to 0.6 mol, the amount of Li₂CO₃ was changed to 0.534 mol, 0.001 mol of M_{O}(SO₄)₃ was replaced with 0.001 mol of MgSO₄, the amount of phosphoric acid was changed to 0.88 mol, the amount of H₄SiO₄ was changed to 0.12 mol, and the amount of NH₄HF₂ was changed to 0.025 mol.

### Comparative example 8

This example was the same as example 1 except that in "(1) preparation of positive electrode active material", the amount of MnSO₄·H₂O was changed to 1.2 mol, the amount of FeSO₄·H₂O was changed to 0.8 mol, the amount of Li₂CO₃ was changed to 0.474 mol, 0.001 mol of M_{O}(SO₄)₃ was replaced with 0.001 mol of MgSO₄, the amount of phosphoric acid was changed to 0.93 mol, the amount of H₄SiO₄ was changed to 0.07 mol, and the amount of NH₄HF₂ was changed to 0.06 mol.

### Comparative example 9

This example was the same as example 1 except that in "(1) preparation of positive electrode active material", no ethylenediamine was added.

### Comparative example 10

This example was the same as example 2 except that in "(1) preparation of positive electrode active material", no ethylenediamine was added.

### Comparative example 11

This example was the same as example 3 except that in "(1) preparation of positive electrode active material", no ethylenediamine was added.

### Comparative example 12

This example was the same as example 4 except that in "(1) preparation of positive electrode active material", no ethylenediamine was added.

### Comparative example 13

This example was the same as example 5 except that in "(1) preparation of positive electrode active material", no ethylenediamine was added.

### Comparative example 14

This example was the same as example 6 except that in "(1) preparation of positive electrode active material", no ethylenediamine was added.

### Comparative example 15

This example was the same as example 7 except that in "(1) preparation of positive electrode active material", no ethylenediamine was added.

### Comparative example 16

This example was the same as example 8 except that in "(1) preparation of positive electrode active material", no ethylenediamine was added.

### Comparative example 17

This example was the same as example 9 except that in "(1) preparation of positive electrode active material", no ethylenediamine was added.

### Comparative example 18

This example was the same as example 10 except that in "(1) preparation of positive electrode active material", no ethylenediamine was added.

### Comparative example 19

This example was the same as example 11 except that in "(1) preparation of positive electrode active material", no ethylenediamine was added.

### II. Test methods for positive electrode active material properties and battery performance

### 1. Determination of chemical formula of positive electrode active material

An aberration corrected scanning transmission electron microscope (ACSTEM) was used for high spatial resolution characterization of the internal microstructure and surface structure of the positive electrode active material, and the chemical formula of the positive electrode active material was obtained in combination with three-dimensional reconstruction techniques. A percentage of a carbon coating layer was measured using an elemental analyzer. A percentage of a doping element in the carbon coating layer was measured using inductively coupled plasma atomic emission spectroscopy.

### 2. Test method for lattice change rate

At a constant temperature of 25°C, the positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represented the lengths of faces of the unit cell, and v0 denoted the volume of the unit cell, which could be obtained directly from XRD refinement results) at that time point were calculated with reference to the standard PDF card.

The positive electrode active material samples were prepared into button batteries using the preparation method of button battery in the foregoing example, and the button batteries were charged at a small rate of 0.05C until the current was reduced to 0.01C. The positive electrode plate was then taken out from the button battery and placed in DMC for 8 hours, then dried, and scraped for powder, and particles with a particle size less than 500 nm were sifted out from the powder. Samples were taken and subjected to the same way as the fresh samples under test above to calculate their lattice constants v1, and (v0-v1)/v0×100% was taken as their lattice change rates before and after complete deintercalation or intercalation of lithium to be listed in the table.

### 3. Test method for Li/Mn antisite defect concentration

The XRD results tested in "test method for lattice change rate" were compared with the PDF (Powder Diffraction File) card of the standard crystal to obtain the Li/Mn antisite defect concentration. Specifically, the XRD results tested in "test method for lattice change rate" were imported into the general structural analysis system (GSAS) software to automatically derive the refinement results, which contained the occupancy of different atoms, and then the Li/Mn antisite defect concentration was obtained by reading the refinement results.

### 4. Test method for surface oxygen valence

5 g of the positive electrode active material sample was taken to prepare into a button battery according to the preparation method of button battery in the foregoing example. The button battery was charged at a small rate of 0.05C until the current was reduced to 0.01C. The positive electrode plate was then taken out from the button battery and placed in DMC for 8 hours, then dried, and scraped for powder, and particles with a particle size less than 500 nm were sifted out from the powder. The obtained particles were measured using electron energy loss spectroscopy (EELS; the model of the instrument used was Talos F200S) to obtain energy loss near edge structures (ELNES) that reflected the density of states and energy level distribution of elements. Based on the density of states and energy level distribution, the number of occupying electrons was calculated by integrating the data of the valence band density of states to deduce the surface oxygen valence after charging.

### 5. Test method for compacted density

5 g of the powder was taken and put in a special mold for compaction (CARVER mold, model 13 mm, USA), and then the mold was put on a compacted density instrument. A pressure of 3T was applied, the thickness of the powder under the pressure (the thickness after pressure relief) was read on the device, and the compacted density was calculated using ρ=m/v.

### 6. Measurement method for dissolution amount of Mn (as well as Fe doping at Mn site) after cycling

Full batteries cycled at 45°C until capacity faded to 80% were discharged to a cut-off voltage of 2.0 V at 0.1C. The battery was then disassembled, the negative electrode plate was removed, and 30 discs with a unit area (1540.25 mm²) were randomly taken on the negative electrode plate and tested using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the dissolution amount of Mn (as well as Fe doping at the Mn site) after cycling. The test standard was in accordance with EPA-6010D-2014.

### 7. Test method for initial gram capacity of button battery

The button battery was charged to 4.3 V at 0.1C under a voltage of 2.5 V to 4.3 V, then charged at constant voltage of 4.3 V to a current less than or equal to 0.05 mA, left standing for 5 min, and then discharged to 2.0 V at 0.1C, and a discharge capacity at that time point was an initial gram capacity and recorded as D0.

### 8. Test method for 3C constant current charge ratio

At a constant temperature of 25°C, new full batteries were left standing for 5 min, and then discharged to 2.5 V at 1/3C. The full batteries were left standing for 5 min, charged to 4.3 V at 1/3C, and then charged at a constant voltage of 4.3 V to a current less than or equal to 0.05 mA. The full batteries were left standing for 5 min. A charge capacity at that time point was recorded as C0. The full batteries were discharged at 1/3C to 2.5 V, left standing for 5 min, then charged at 3C to 4.3 V, and left standing for 5 min. The charge capacity at that time point was recorded as C1. The 3C constant current charge ratio was C1/C0×100%.

A higher 3C constant current charge ratio indicates better rate performance of the battery.

### 9. Test for cycling performance of full battery at 45°C

At a constant temperature of 45°C, the full batteries were charged to 4.3 V at 1C under a voltage of 2.5 V to 4.3 V, and then charged at constant voltage of 4.3 V to a current less than or equal to 0.05 mA. The full batteries were left standing for 5 min and then discharged to 2.5 V at 1C. The discharge capacity at that time point was recorded as D0. The charge and discharge cycle was repeated until the discharge capacity was reduced to 80% of D0. The number of cycles the battery had undergone at that time point was recorded.

### 10. Test for swelling of full battery at 60°C

The full batteries at 100% state of charge (SOC) were stored at 60°C. The open circuit voltage (OCV) and alternating current internal resistance (IMP) of the cells were measured before, during, and after storage to monitor the SOCs and the volumes of the cells were measured. The full batteries were taken out after every 48 h of storage and left standing for 1 h. Then the open circuit voltage (OCV) and internal resistance (IMP) were tested, and the cell volumes were tested in a drainage method after the batteries were cooled to room temperature. In the drainage method, first a scale that automatically performed unit conversion on dial data was used for separately measuring a gravity of the cell, denoted as Fi, then the cell was completely placed into deionized water (density given to be 1 g/cm³), and the gravity of the cell at that time point was measured as F₂. The buoyant force experienced by the cell, denoted as F_{buoyant}, was calculated as F₁-F₂. Then, according to Archimedes' principle, F_{buoyant}= ρ × g × V_{displaced}, the volume V of the cell could be calculated as V=(F₁-F₂)/(ρ × g).

It can be learned from the OCV and IMP test results that the batteries of all the examples always maintained an SOC of above 99% throughout the storage test.

After 30 days of storage, the cell volumes were measured and the percentage increases in the cell volumes after storage relative to the cell volumes before storage were calculated.

In addition, the remaining capacities of the cells were measured. The full batteries were charged to 4.3 V at 1C under a voltage of 2.5 V to 4.3 V, then charged at constant voltage of 4.3 V to a current less than or equal to 0.05 mA. The full batteries were left standing for 5 min. The charge capacities at that time point were the remaining capacities of the cells.

Positive electrode active material compositions in examples 1 to 11 and comparative examples 1 to 8 are given in Table 1. Performance data of the positive electrode active materials, button batteries, or full batteries in examples 1 to 11 and comparative examples 1 to 8 measured in the performance test methods are given in Table 2. Positive electrode active materials of examples 12 to 61 and comparative examples 9 to 19 are given in Table 3. Performance data of the positive electrode active materials, button batteries, or full batteries in examples 12 to 61 and comparative examples 9 to 19 measured in the performance test methods are given in Table 4.

**Table 1 Positive electrode active material compositions in examples 1 to 11 and comparative examples 1 to 8**

| | Positive electrode active material | Mass percentage of doped carbon layer | Percentage of doping element |
|---|---|---|---|
| Comparative example 1 | LiMnPO₄ | 4% | 8% |
| Comparative example 2 | LiMn_{0.85}Fe_{0.15}PO₄ | 4% | 8% |
| Comparative example 3 | Li_{0.990}Mg_{0.005}Mn_{0.95}Zn_{0.05}PO₄ | 4% | 8% |
| Comparative example 4 | Li_{0.90}Nb_{0.01}Mn_{0.6}Fe_{0.4}PO_{3.95}F_{0.05} | 4% | 8% |
| Comparative example 5 | Li_{0.76}Mg_{0.12}Mn_{0.7}Fe_{0.3}P_{0.999}Si_{0.001}O_{3.99 9}F_{0.001} | 4% | 8% |
| Comparative example 6 | Li_{0.998}Mg_{0.001}Mn_{0.4}Zn_{0.6}P_{0.999}Si_{0.001}O_{3 .999}F_{0.001} | 4% | 8% |
| Comparative example 7 | Li_{1.068}Mg_{0.001}Mn_{0.7}Fe_{0.3}P_{0.88}Si_{0.12}O_{3.95} F_{0.05} | 4% | 8% |
| Comparative example 8 | Li_{0.948}Mg_{0.001}Mn_{0.6}Fe_{0.4}P_{0.93}Si_{0.07}O_{3.88} F_{0.12} | 4% | 8% |
| Example 1 | Li_{0.994}Mo_{0.001}Mn_{0.65}Fe_{0.35}P_{0.999}Si_{0.001} O_{3.999}F_{0.001} | 4% | 8% |
| Example 2 | Li_{0.977}Mg_{0.001}Mn_{0.65}Fe_{0.34}Ti_{0.01}P_{0.999}N _{0.001}O_{3.999}F_{0.001} | 4% | 8% |
| Example 3 | Li_{0.992}W_{0.001}Mn_{0.65}Fe_{0.35}P_{0.999}S_{0.001}O₃. ₉₉₉F_{0.001} | 4% | 8% |
| Example 4 | Li_{0.997}Al_{0.001}Mn_{0.65}Fe_{0.35}P_{0.999}Si_{0.001}O _{3.999}Cl_{0.001} | 4% | 8% |
| Example 5 | Li_{0.993}Nb_{0.001}Mn_{0.65}Fe_{0.345}V_{0.005}P_{0.999}S _{0.001}O_{3.999}F_{0.001} | 4% | 8% |
| Example 6 | Li_{0.993}Nb_{0.001}Mn_{0.65}Fe_{0.34}V_{0.005}Mg_{0.005} P_{0.999}S_{0.001}O_{3.999}F_{0.001} | 4% | 8% |
| Example 7 | Li_{0.993}Nb_{0.001}Mn_{0.65}Fe_{0.34}V_{0.005}Co_{0.005} P_{0.999}S_{0.001}O_{3.999}F_{0.001} | 4% | 8% |
| Example 8 | Li_{0.993}Nb_{0.001}Mn_{0.65}Fe_{0.34}V_{0.005}Ni_{0.005} P_{0.999}S_{0.001}O_{3.999}F_{0.001} | 4% | 8% |
| Example 9 | Li_{0.991}Nb_{0.001}Mn_{0.65}Fe_{0.349}Ti_{0.001}P_{0.999} S_{0.001}O_{3.999}Cl_{0.001} | 4% | 8% |
| Example 10 | Li_{0.995}Nb_{0.001}Mn_{0.65}Fe_{0.34}V_{0.005}Mg_{0.005} P_{0.999}Si_{0.001}O_{3.999}Br_{0.001} | 4% | 8% |
| Example 11 | Li_{0.998}Mg_{0.001}Mn_{0.65}Fe_{0.345}V_{0.005}P_{0.999} Si_{0.001}O_{3.999}Br_{0.001} | 4% | 8% |

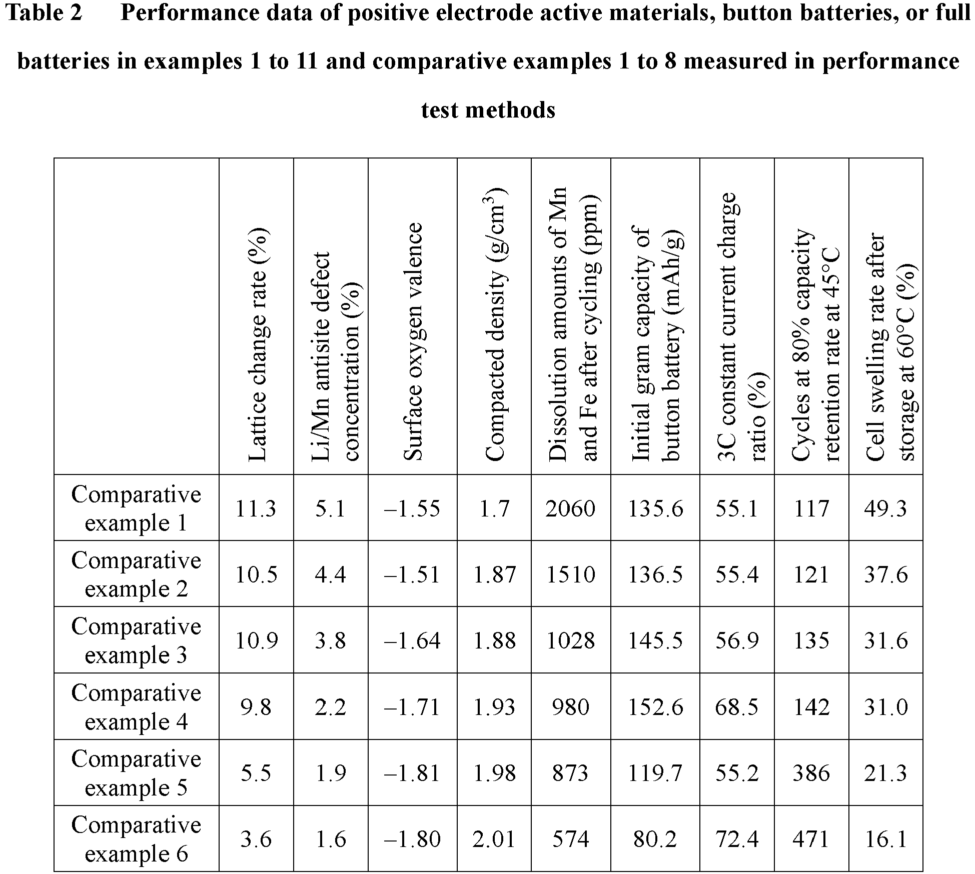

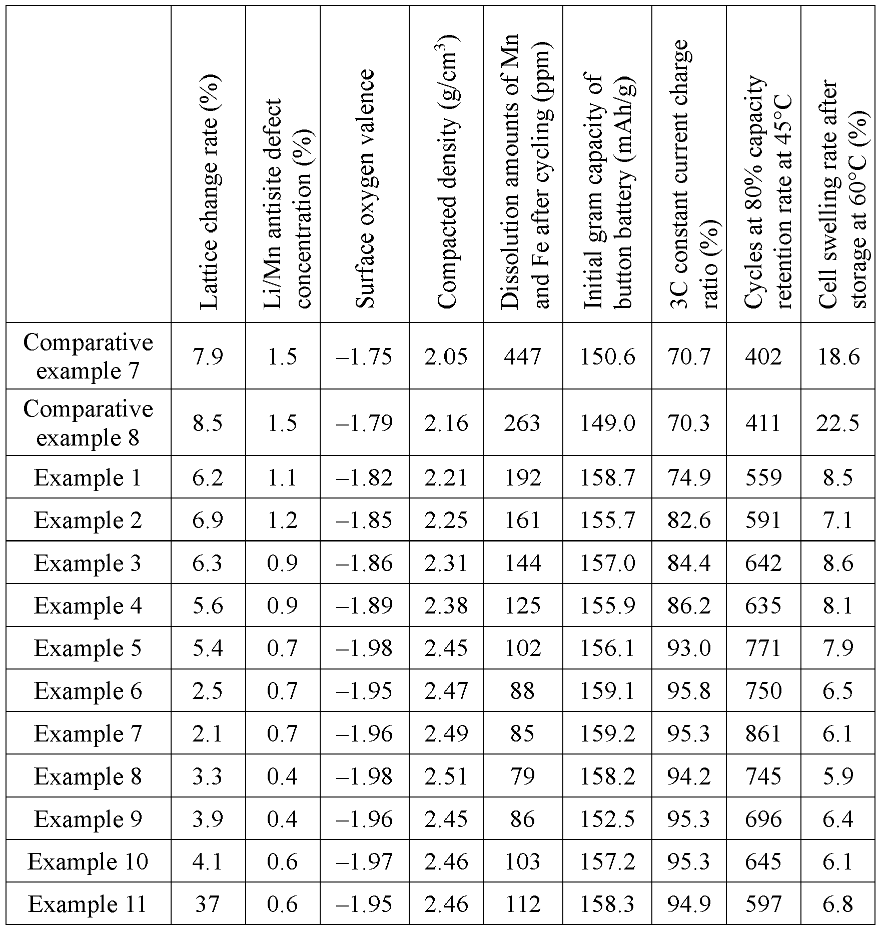

It can be learned from the data in Table 2 that the core doping of the positive electrode material is conducive to alleviating the iron dissolution problem and has an obvious effect on improving the initial capacity of the material and the rate performance and cycling performance of the battery.

**Table 3 Positive electrode active material compositions in examples 12 to 61 and comparative examples 9 to 19**

| | Positive electrode active material | (1-y):y | a/x | Mass percentage of doped carbon layer | Percentage of doping element |
|---|---|---|---|---|---|
| Example 12 | Li_{0.997}Mg_{0.001}Mn_{0.68}Fe_{0.3}V_{0.02}P_{0.999} N_{0.001}O_{3.999}F_{0.001} | 2.13 | 997 | 4% | 8% |
| Example 13 | Li_{0.997}Mg_{0.001}Mn_{0.58}Fe₀₄V_{0.02}P_{0.999} N_{0.001}O_{3.999}F_{0.001} | 1.38 | 997 | 4% | 8% |
| Example 14 | Li_{0.997}Mg_{0.001}Mn_{0.65}Fe_{0.3}V_{0.05}P_{0.999} N_{0.001}O_{3.999}F_{0.001} | 1.86 | 997 | 4% | 8% |
| Example 15 | Li_{0.988}Mg_{0.005}Mn_{0.6}Fe_{0.35}V_{0.05}P_{0.999} S_{0.001}O_{3.999}F_{0.001} | 1.50 | 197.6 | 4% | 8% |
| Example 16 | Li_{0.984}Mg_{0.005}Mn_{0.6}Fe_{0.35}V_{0.05}P_{0.995} S_{0.005}O_{3.999}F_{0.001} | 1.50 | 196.8 | 4% | 8% |
| Example 17 | Li_{0.984}Mg_{0.005}Mn_{0.6}Fe_{0.35}V_{0.05}P_{0.999} S_{0.001}O_{3.995}F_{0.005} | 1.50 | 196.8 | 4% | 8% |
| Example 18 | Li_{0.984}Mg_{0.005}Mn_{0.65}Fe_{0.25}V_{0.05}CO₀. ₀₅P_{0.999}S_{0.001}O_{3.995}F_{0.005} | 1.86 | 196.8 | 4% | 8% |
| Example 19 | Li_{0.984}Mg_{0.005}Mn_{0.65}Fe_{0.20}V_{0.05}CO₀. ₁₀P_{0.999}S_{0.001}O_{3.995}F_{0.005} | 1.86 | 196.8 | 4% | 8% |
| Example 20 | Li_{0.984}Mg_{0.005}Mn_{0.75}Fe_{0.05}V_{0.05}Co₀. ₁₅P_{0.999}S_{0.001}O_{3.995}F_{0.005} | 3.00 | 196.8 | 4% | 8% |
| Example 21 | Li_{0.984}Mg_{0.005}Mn_{0.65}Fe_{0.25}V_{0.05}Ni_{0.0 5}P_{0.999}S_{0.001}O_{3.995}F_{0.005} | 1.86 | 196.8 | 4% | 8% |
| Example 22 | Li_{0.984}Mg_{0.005}Mn_{0.75}Fe_{0.10}V_{0.05}Ni_{0.1 0}P_{0.999}S_{0.001}O_{3.995}F_{0.005} | 3.00 | 196.8 | 4% | 8% |
| Example 23 | Li_{0.984}Mg_{0.005}Mn_{0.5}Fe_{0.15}V_{0.05}Co_{0.1 0}P_{0.999}S_{0.001}O_{3.995}F_{0.005} | 2.33 | 196.8 | 4% | 8% |
| Example 24 | Li_{0.984}Mg_{0.005}Mn_{0.6}Fe_{0.25}V_{0.05}Co_{0.1 0}P_{0.999}S_{0.001}O_{3.995}F_{0.005} | 1.50 | 196.8 | 4% | 8% |
| Example 25 | Li_{0.984}Mg_{0.005}Mn_{0.5}Fe_{0.35}V_{0.05}Co_{0.1 0}P_{0.999}S_{0.001}O_{3.995}F_{0.005} | 1.00 | 196.8 | 4% | 8% |
| Example 26 | Li_{1.01}Mg_{0.005}Mn_{0.7}Fe_{0.15}V_{0.05}Co_{0.10} P_{0.9}Si_{0.1}O_{3.92}F_{0.08} | 2.33 | 202 | 4% | 8% |
| Example 27 | Li_{0.97}Mg_{0.005}Mn_{0.7}Fe_{0.15}V_{0.05}Co_{0.10} P_{0.92}Si_{0.08}O_{3.9}F_{0.1} | 2.33 | 194 | 4% | 8% |
| Example 28 | Li_{0.994}Mo_{0.001}Mn_{0.65}Fe_{0.35}P_{0.999}Si_{0.0 01}O_{3.999}F_{0.001} | 0.538 | 994 | 4% | 0.5% N |
| Example 29 | Li_{0.994}Mo_{0.001}Mn_{0.65}Fe_{0.35}P_{0.999}Si_{0.0 01}O_{3.999}F_{0.001} | 0.538 | 994 | 4% | 1% N |
| Example 30 | Li_{0.994}Mo_{0.001}Mn_{0.65}Fe_{0.35}P_{0.999}Si_{0.0 01}O_{3.999}F_{0.001} | 0.538 | 994 | 4% | 15% N |
| Example 31 | Li_{0.994}Mo_{0.001}Mn_{0.65}Fe_{0.35}P_{0.999}Si_{0.0 01}O_{3.999}F_{0.001} | 0.538 | 994 | 4% | 20% N |
| Example 32 | Li_{0.994}Mo_{0.001}Mn_{0.65}Fe_{0.35}P_{0.999}Si_{0.0 01}O_{3.999}F_{0.001} | 0.538 | 994 | 4% | 25% N |
| Example 33 | Li_{0.994}Mo_{0.001}Mn_{0.65}Fe_{0.35}P_{0.999}Si_{0.0 01}O_{3.999}F_{0.001} | 0.538 | 994 | 4% | 35% N |
| Example 34 | Li_{0.994}Mo_{0.001}Mn_{0.65}Fe_{0.35}P_{0.999}Si_{0.0 01}O_{3.999}F_{0.001} | 0.538 | 994 | 4% | 0.2% P |
| Example 35 | Li_{0.994}Mo_{0.001}Mn_{0.65}Fe_{0.35}P_{0.999}Si_{0.0 01}O_{3.999}F_{0.001} | 0.538 | 994 | 4% | 0.5% P |
| Example 36 | Li_{0.994}Mo_{0.001}Mn_{0.65}Fe_{0.35}P_{0.999}Si_{0.0 01}O_{3.999}F_{0.001} | 0.538 | 994 | 4% | 3% P |
| Example 37 | Li_{0.994}Mo_{0.001}Mn_{0.65}Fe_{0.35}P_{0.999}Si_{0.0 01}O_{3.999}F_{0.001} | 0.538 | 994 | 4% | 5% P |
| Example 38 | Li_{0.994}Mo_{0.001}Mn_{0.65}Fe_{0.35}P_{0.999}Si_{0.0 01}O_{3.999}F_{0.001} | 0.538 | 994 | 4% | 8% P |
| Example 39 | Li_{0.994}Mo_{0.001}Mn_{0.65}Fe_{0.35}P_{0.999}Si_{0.0 01}O_{3.999}F_{0.001} | 0.538 | 994 | 4% | 12% P |
| Example 40 | Li_{0.994}Mo_{0.001}Mn_{0.65}Fe_{0.35}P_{0.999}Si_{0.0 01}O_{3.999}F_{0.001} | 0.538 | 994 | 4% | 20% P |
| Example 41 | Li_{0.994}Mo_{0.001}Mn_{0.65}Fe_{0.35}P_{0.999}Si_{0.0 01}O_{3.999}F_{0.001} | 0.538 | 994 | 4% | 0.5% S |
| Example 42 | Li_{0.994}Mo_{0.001}Mn_{0.65}Fe_{0.35}P_{0.999}Si_{0.0 01}O_{3.999}F_{0.001} | 0.538 | 994 | 4% | 1% S |
| Example 43 | Li_{0.994}Mo_{0.001}Mn_{0.65}Fe_{0.35}P_{0.999}Si_{0.0 01}O_{3.999}F_{0.001} | 0.538 | 994 | 4% | 8% S |
| Example 44 | Li_{0.994}Mo_{0.001}Mn_{0.65}Fe_{0.35}P_{0.999}Si_{0.0 01}O_{3.999}F_{0.001} | 0.538 | 994 | 4% | 15% S |
| Example 45 | Li_{0.994}Mo_{0.001}Mn_{0.65}Fe_{0.35}P_{0.999}Si_{0.0 01}O_{3.999}F_{0.001} | 0.538 | 994 | 4% | 20% S |
| Example 46 | Li_{0.994}Mo_{0.001}Mn_{0.65}Fe_{0.35}P_{0.999}Si_{0.0 01}O_{3.999}F_{0.001} | 0.538 | 994 | 4% | 25% S |
| Example 47 | Li_{0.994}Mo_{0.001}Mn_{0.65}Fe_{0.35}P_{0.999}Si_{0.0 01}O_{3.999}F_{0.001} | 0.538 | 994 | 4% | 35% S |
| Example 48 | Li_{0.994}Mo_{0.001}Mn_{0.65}Fe_{0.35}P_{0.999}Si_{0.0 01}O_{3.999}F_{0.001} | 0.538 | 994 | 4% | 0.2% B |
| Example 49 | Li_{0.994}Mo_{0.001}Mn_{0.65}Fe_{0.35}P_{0.999}Si_{0.0 01}O_{3.999}F_{0.001} | 0.538 | 994 | 4% | 0.5% B |
| Example 50 | Li_{0.994}Mo_{0.001}Mn_{0.65}Fe_{0.35}P_{0.999}Si_{0.0 01}O_{3.999}F_{0.001} | 0.538 | 994 | 4% | 3% B |
| Example 51 | Li_{0.994}Mo_{0.001}Mn_{0.65}Fe_{0.35}P_{0.999}Si_{0.0 01}O_{3.999}F_{0.001} | 0.538 | 994 | 4% | 5% B |
| Example 52 | Li_{0.994}Mo_{0.001}Mn_{0.65}Fe_{0.35}P_{0.999}Si_{0.0 01}O_{3.999}F_{0.001} | 0.538 | 994 | 4% | 8% B |
| Example 53 | Li_{0.994}Mo_{0.001}Mn_{0.65}Fe_{0.35}P_{0.999}Si_{0.0 01}O_{3.999}F_{0.001} | 0.538 | 994 | 4% | 12% B |
| Example 54 | Li_{0.994}Mo_{0.001}Mn_{0.65}Fe_{0.35}P_{0.999}Si_{0.0 01}O_{3.999}F_{0.001} | 0.538 | 994 | 4% | 20% B |
| Example 55 | Li_{0.994}Mo_{0.001}Mn_{0.65}Fe_{0.35}P_{0.999}Si_{0.0 01}O_{3.999}F_{0.001} | 0.538 | 994 | 4% | 0.2% F |
| Example 56 | Li_{0.994}Mo_{0.001}Mn_{0.65}Fe_{0.35}P_{0.999}Si_{0.0 01}O_{3.999}F_{0.001} | 0.538 | 994 | 4% | 0.5% F |
| Example 57 | Li_{0.994}Mo_{0.001}Mn_{0.65}Fe_{0.35}P_{0.999}Si_{0.0 01}O_{3.999}F_{0.001} | 0.538 | 994 | 4% | 3% F |
| Example 58 | Li_{0.994}Mo_{0.001}Mn_{0.65}Fe_{0.35}P_{0.999}Si_{0.0 01}O_{3.999}F_{0.001} | 0.538 | 994 | 4% | 5% F |
| Example 59 | Li_{0.994}Mo_{0.001}Mn_{0.65}Fe_{0.35}P_{0.999}Si_{0.0 01}O_{3.999}F_{0.001} | 0.538 | 994 | 4% | 8% F |
| Example 60 | Li_{0.994}Mo_{0.001}Mn_{0.65}Fe_{0.35}P_{0.999}Si_{0.0 01}O_{3.999}F_{0.001} | 0.538 | 994 | 4% | 12% F |
| Example 61 | Li_{0.994}Mo_{0.001}Mn_{0.65}Fe_{0.35}P_{0.999}Si_{0.0 01}O_{3.999}F_{0.001} | 0.538 | 994 | 4% | 20% F |
| Comparative example 9 | Li_{0.994}Mo_{0.001}Mn_{0.65}Fe_{0.35}P_{0.999}Si_{0.0 01}O_{3.999}F_{0.001} | 0.538 | 994 | 4% | 0 |
| Comparative example 10 | Li_{0.977}Mg_{0.001}Mn_{0.65}Fe_{0.34}Ti_{0.01}P_{0.99 9}N_{0.001}O_{3.999}F_{0.001} | -- | -- | 4% | 0 |
| Comparative example 11 | Li_{0.992}W_{0.001}Mn_{0 .65}Fe_{0.35}P_{0.999}S_{0.001} O_{3.999}F_{0.001} | -- | -- | 4% | 0 |
| Comparative example 12 | Li_{0.997}Al_{0.001}Mn_{0.65}Fe_{0.35}P_{0.999}Si_{0.00 1}O_{3.999}Cl_{0.001} | -- | -- | 4% | 0 |
| Comparative example 13 | Li_{0.993}Nb_{0.001}Mn_{0.65}Fe_{0.345}V_{0.005}P₀. ₉₉₉S_{0.001}O_{3.999}F_{0.001} | -- | -- | 4% | 0 |
| Comparative example 14 | Li_{0.993}Nb_{0.001}Mn_{0.65}Fe_{0.34}V_{0.005}Mg _{0.005}P_{0.999}S_{0.001}O_{3.999}F_{0.001} | -- | -- | 4% | 0 |
| Comparative example 15 | Li_{0.993}Nb_{0.001}Mn_{0.65}Fe_{0.34}V_{0.005}Co₀. ₀₀₅P_{0.999}S_{0.001}O_{3.999}F_{0.001} | -- | -- | 4% | 0 |
| Comparative example 16 | Li_{0.993}Nb_{0.001}Mn_{0.65}Fe_{0.34}V_{0.005}Ni₀. ₀₀₅P_{0.999}S_{0.001}O_{3.999}F_{0.001} | -- | -- | 4% | 0 |
| Comparative example 17 | Li_{0.991}Nb_{0.001}Mn_{0.65}Fe_{0.349}Ti_{0.001}P₀. ₉₉₉S_{0.001}O_{3.999}Q_{0.001} | -- | -- | 4% | 0 |
| Comparative example 18 | Li_{0.995}Nb_{0.001}Mn_{0.65}Fe_{0.34}V_{0.005}Mg _{0.005}P_{0.999}Si_{0.001}O_{3.999}Br_{0.001} | -- | -- | 4% | 0 |
| Comparative example 19 | Li_{0.998}Mg_{0.001}Mn_{0.65}Fe_{0.345}V_{0.005}P₀. ₉₉₉Si_{0.001}O_{3.999}Br_{0.001} | -- | -- | 4% | 0 |

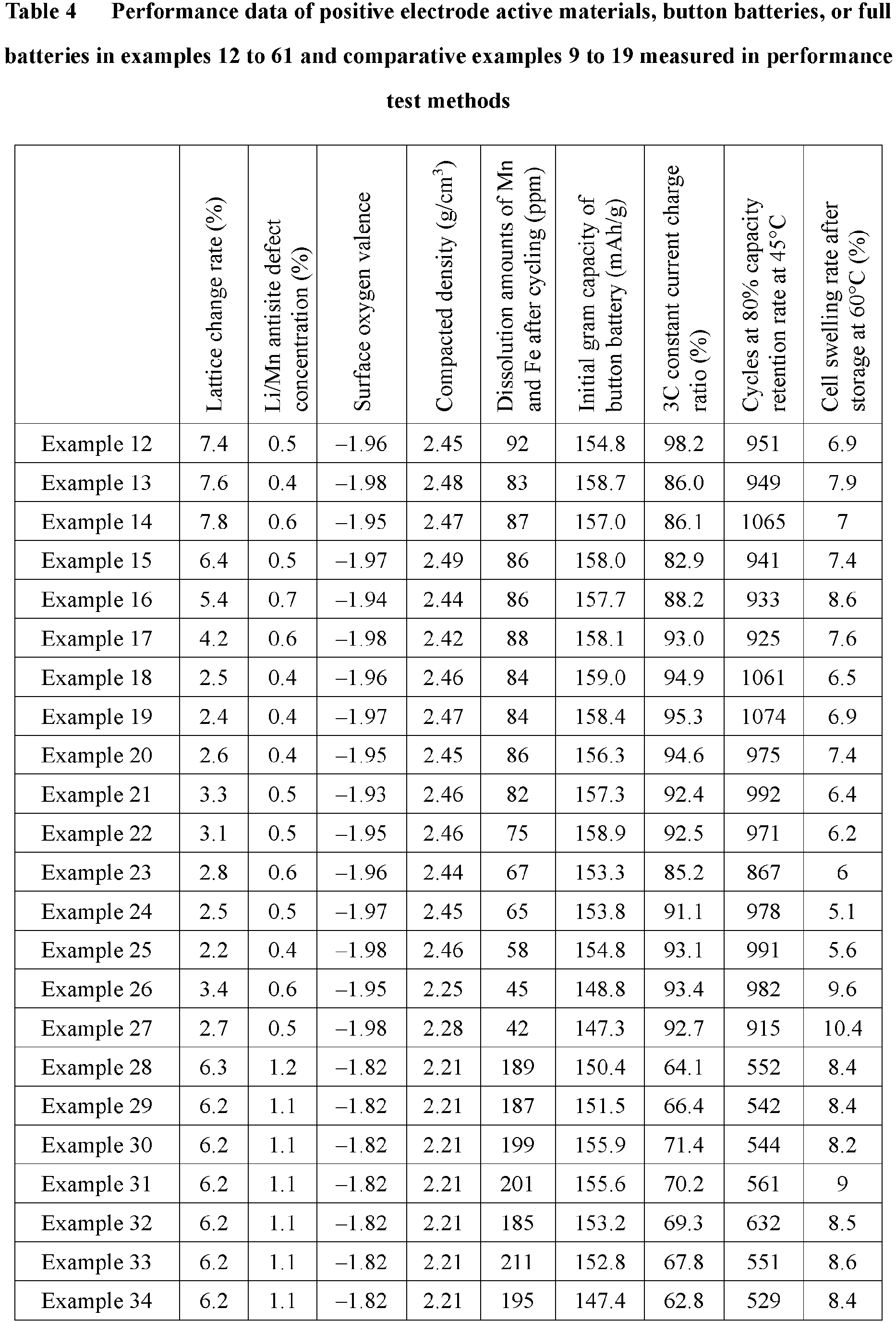

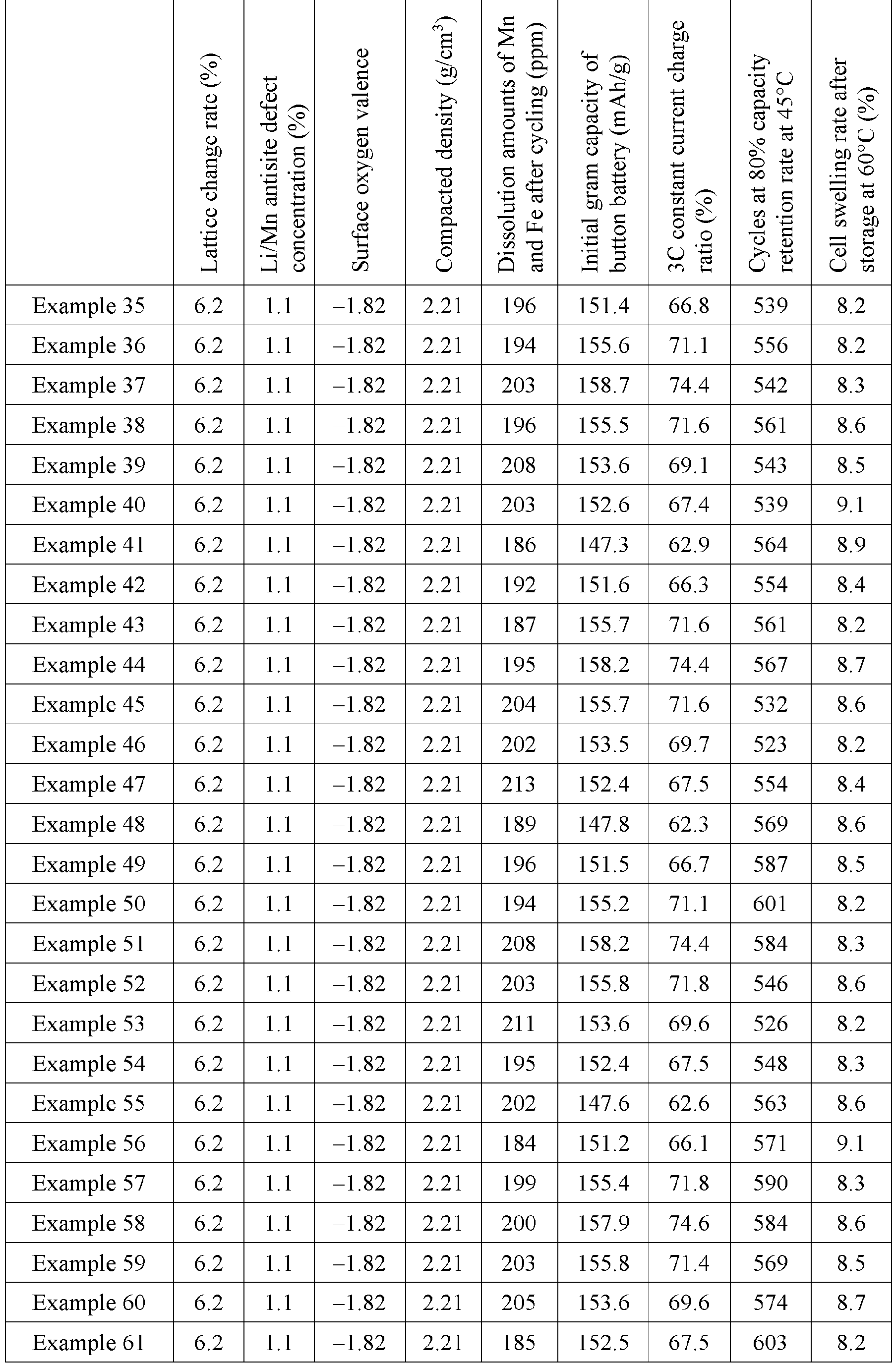

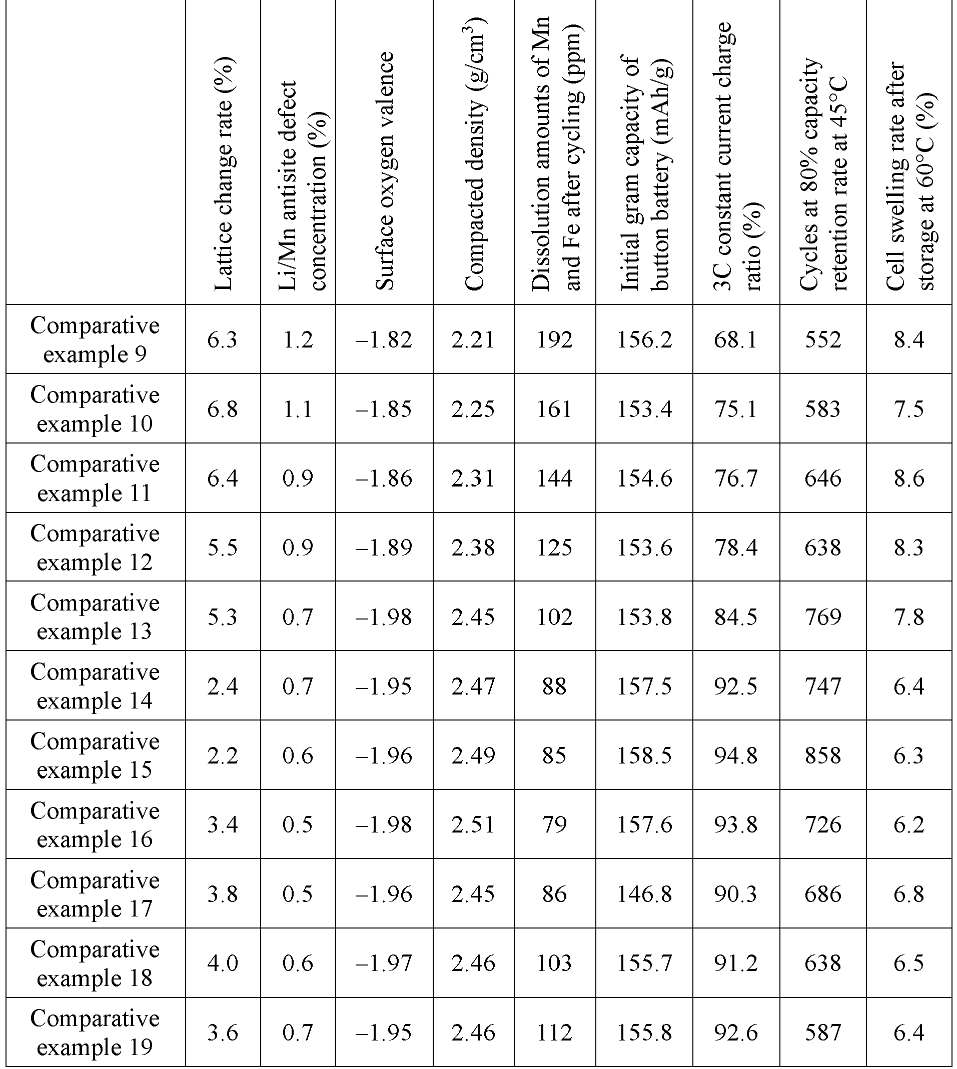

It can be learned from Table 4 that as compared with undoped carbon, the specific capacity and rate performance of the positive electrode material with the doped carbon layer are also correspondingly improved.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A positive electrode active material, comprising a core and a shell layer enveloping the core, the core having a chemical formula LiₐAₓMn_{1-y}B_{y}P_{1-z}C_{z}O₄₋ₙDₙ,
wherein A comprises one or more elements selected from a group consisting of Zn, Al, Na, K, Mg, Nb, Mo, and W,
B comprises one or more elements selected from a group consisting of Ti, V, Zr, Fe, Ni, Mg, Co, Ga, Sn, Sb, Nb, and Ge,
C comprises one or more elements selected from a group consisting of B (boron), S, Si, and N,
D comprises one or more elements selected from a group consisting of S, F, Cl, and Br, and
a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral; and
the shell layer is a doped carbon layer, a doping element in the doped carbon layer comprising any one or more selected from a group consisting of nitrogen, phosphorus, sulfur, boron, and fluorine.

2. The positive electrode active material according to claim 1, wherein based on a weight of the core, an application amount of the doped carbon layer is greater than 0wt% and less than or equal to 6wt%, optionally from 3wt% to 5wt%.

3. The positive electrode active material according to claim 1 or 2, wherein a mass percentage of the doping element in the doped carbon layer is below 30%, and optionally, the mass percentage of the doping element in the doped carbon layer is below 20%.

4. The positive electrode active material according to any one of claims 1 to 3, wherein
the doping element is element nitrogen and/or element sulfur, and a mass percentage of the doping element in the doped carbon layer is 1% to 15%; or
the doping element is element phosphorus, element boron, and/or element fluorine, and a mass percentage of the doping element in the doped carbon layer is 0.5% to 5%; and
optionally, the doping element is nitrogen, phosphorus, sulfur, boron, or fluorine.

5. The positive electrode active material according to any one of claims 1 to 4, wherein A, C, and D are each independently any one element within their respective ranges, and B is at least two elements within its range; and
optionally,
A is any one element selected from Mg and Nb, and/or
B is at least two elements selected from a group consisting of Fe, Ti, V, Co, and Mg, optionally Fe and more than one element selected from a group consisting of Ti, V, Co, and Mg, and/or
C is S, and/or
D is F.

6. The positive electrode active material according to any one of claims 1 to 5, wherein x is selected from a range of 0.001 to 0.005; and/or y is selected from a range of 0.01 to 0.5, optionally from a range of 0.25 to 0.5; and/or z is selected from a range of 0.001 to 0.005; and/or n is selected from a range of 0.001 to 0.005.

7. The positive electrode active material according to any one of claims 1 to 6, wherein (1-y):y is within a range of 1 to 4, optionally within a range of 1.5 to 3, and a:x is within a range of 9 to 1100, optionally within a range of 190 to 998.

8. The positive electrode active material according to any one of claims 1 to 7, wherein a lattice change rate of the core is below 8%, optionally below 4%.

9. The positive electrode active material according to any one of claims 1 to 8, wherein a Li/Mn antisite defect concentration of the positive electrode active material is below 2%, optionally below 0.5%.

10. The positive electrode active material according to any one of claims 1 to 9, wherein a surface oxygen valence of the positive electrode active material is below -1.82, optionally from - 1.89 to -1.98.

11. The positive electrode active material according to any one of claims 1 to 7, wherein a compacted density under 3T of the positive electrode active material is above 2.0 g/cm³, optionally above 2.2 g/cm³.

12. A preparation method of the positive electrode active material according to any one of claims 1 to 11, wherein the preparation method comprises the following steps:
(1) dissolving a manganese source, a source of element B, and an acid in a solvent and stirring to generate a suspension of a manganese salt doped with element B, and filtering the suspension and drying a filter cake to obtain the manganese salt doped with element B;
(2) adding a lithium source, a phosphorus source, a source of element A, a source of element C, a source of element D, a carbon source, a source of a doping element in a carbon layer, a solvent, and the manganese salt doped with element B obtained in step (1) into a reaction vessel for grinding and mixing to obtain a slurry;
(3) transferring the slurry obtained in step (2) to a spray drying device for spray drying and granulation to obtain particles; and
(4) sintering the particles obtained in step (3) to obtain the positive electrode active material.

13. The preparation method according to claim 12, wherein
the source of element A is selected from at least one from a group consisting of elementary substance, oxide, phosphate, oxalate, carbonate, and sulfate of element A;
the source of element B is selected from at least one from a group consisting of elementary substance, oxide, phosphate, oxalate, carbonate, and sulfate of element B;
the source of element C is selected from at least one from a group consisting of sulfate, borate, nitrate, and silicate of element C;
the source of element D is selected from at least one from a group consisting of elementary substance and ammonium salt of element D;
the carbon source is selected from one or more from a group consisting of starch, sucrose, glucose, cellulose, polyvinyl alcohol, polyethylene glycol, sodium carboxymethyl cellulose, citric acid, lactic acid, and succinic acid;
the source of the doping element in the carbon layer is selected from one or more from a group consisting of a source of element nitrogen, a source of element phosphorus, a source of element sulfur, a source of element boron, and a source of element fluorine;
the source of element nitrogen is selected from any one or more from a group consisting of ethylenediamine, melamine, benzylamine, acetonitrile, aminated sucrose, pyrrole, aniline, acrylonitrile, polyimide acid, and a nitrogen-containing aliphatic heterocyclic compound;
the source of element phosphorus is selected from any one or more from a group consisting of elemental phosphorus, phosphorus pentoxide, ammonium dihydrogen phosphate, ammonium phosphate, phosphoric acid, hypophosphorous acid, phosphorous acid, metaphosphoric acid, pyrophosphoric acid, polyphosphoric acid, phytic acid, phosphorus trichloride, phosphorus pentachloride, phosphorus tribromide, triphenoxyphos, triphenylphosphine, and tributylphosphine;
the source of element sulfur is selected from any one or more from a group consisting of sulfur powder, sulfuric acid, sulfurous acid, ammonium sulfate, thiophene, thiazole, thiourea, dimethyl sulfoxide, thioacetamide, and mercaptan;
the source of element boron is selected from any one or more from a group consisting of elemental boron, boric acid, diboron trioxide, boron nitride, trimethyl borate, sodium tetraphenylborate, and boron trichloride; and
the source of element fluorine is selected from any one or more from a group consisting of hydrofluoric acid, ammonium fluoride, and a fluorine-containing organic substance, the fluorine-containing organic substance being selected from any one of fluorine-containing alkane, fluorine-containing olefin, fluorine-containing aromatic hydrocarbon, and fluorine-containing carboxylic acid.

14. A positive electrode plate, comprising a positive electrode current collector and a positive electrode film layer disposed on at least one surface of the positive electrode current collector, wherein the positive electrode film layer comprises the positive electrode active material according to any one of claims 1 to 11 or a positive electrode active material prepared using the preparation method according to claim 12 or 13; and based on a total weight of the positive electrode film layer, a percentage of the positive electrode active material in the positive electrode film layer is above 10wt%, optionally from 95wt% to 99.5wt%.

15. A secondary battery, comprising the positive electrode active material according to any one of claims 1 to 11 or a positive electrode active material prepared using the preparation method according to claim 12 or 13 or the positive electrode plate according to claim 14.

16. A battery module, comprising a secondary battery, wherein the secondary battery is the secondary battery according to claim 15.

17. A battery pack, comprising a battery module, wherein the battery module is the battery module according to claim 16.

18. An electric apparatus, comprising a secondary battery, a battery module, or a battery pack, wherein the secondary battery is selected from the secondary battery according to claim 15, the battery module is the battery module according to claim 16, or the battery pack is the battery pack according to claim 17.
